# EUROPÄISCHE PATENTSCHRIFT

(11) **EP 4 143 519 B1**
(45) Veröffentlichungstag und Bekanntmachung des Hinweises auf die Patenterteilung: **19.08.2026**
(21) Anmeldenummer: 21722410.4
(22) Anmeldetag: 26.04.2021
(51) Int. Cl.: G01J 1/04, G01J 1/42, G01W 1/10, G01W 1/12

(54) **VERFAHREN UND VORRICHTUNG ZUR BESTIMMUNG EINER GLOBALEN BESTRAHLUNGSSTÄRKE SOLARER STRAHLUNG**
METHOD AND DEVICE FOR DETERMINING A GLOBAL IRRADIANCE OF SOLAR RADIATION
PROCÉDÉ ET DISPOSITIF DE DÉTERMINATION D'UN ÉCLAIREMENT ÉNERGÉTIQUE GLOBAL DE RAYONNEMENT SOLAIRE

(30) Priorität: 28.04.2020 DE 102020111590
(43) Veröffentlichungstag der Anmeldung: 08.03.2023
(73) Patentinhaber: Deutsches Zentrum für Luft- und Raumfahrt e.V., 53227 Bonn (DE)
(72) Erfinder: BLUM, Niklas, 04001 Almeria (ES); WILBERT, Stefan, 04001 Almeria (ES)
(74) Vertreter: RPK Patentanwälte Reinhardt und Kaufmann Partnerschaft mbB
(86) Internationale Anmeldenummer: PCT/EP2021/060871
(87) Internationale Veröffentlichungsnummer: WO 2021/219570

(56) Entgegenhaltungen:
- SCOLARI ENRICA ET AL: "Local estimation of the global horizontal irradiance using an all-sky camera", SOLAR ENERGY, PERGAMON PRESS. OXFORD, GB, vol. 173, 29 August 2018 (2018-08-29), pages 1225 - 1235, XP085532967, ISSN: 0038-092X, DOI: 10.1016/J.SOLENER.2018.08.042
- YINGHAO CHU ET AL: "A Smart Image-Based Cloud Detection System for Intrahour Solar Irradiance Forecasts", JOURNAL OF ATMOSPHERIC AND OCEANIC TECHNOLOGY, vol. 31, no. 9, 1 September 2014 (2014-09-01), US, pages 1995 - 2007, XP055559545, ISSN: 0739-0572, DOI: 10.1175/JTECH-D-13-00209.1
- REMUND JAN: "Strahlungsvorhersage mit Wolkenkameras - erste Resultate des Benchmarks", PV SYMPOSIUM BAD STAFFELSTEIN, 9 April 2020 (2020-04-09), pages 1 - 27, XP055825061, Retrieved from the Internet <URL:https://www.pv-symposium.de/fileadmin/data/PVSYM/Webinare/Folien_freigegeben_Remund.pdf> [retrieved on 20210716]
- GUEYMARD CHRISTIAN A ED - HO YUN JAE ET AL: "Cloud and albedo enhancement impacts on solar irradiance using high-frequency measurements from thermopile and photodiode radiometers. Part 2: Performance of separation and transposition models for global tilted irradiance", SOLAR ENERGY, PERGAMON PRESS. OXFORD, GB, vol. 153, 12 May 2017 (2017-05-12), pages 766 - 779, XP085164076, ISSN: 0038-092X, DOI: 10.1016/J.SOLENER.2017.04.068
- 33RD EUROPEAN PHOTOVOLTAIC SOLAR ENERGY CONFERENCE AND EXHIBITION, PROCEEDINGS OF THE INTERNATIONAL CONFERENCE, WIP-RENEWABLE ENERGIES, SYLVENSTEINSTR. 2 81369 MUNICH, GERMANY, 25 September 2017 (2017-09-25), XP040698655, ISBN: 978-3-936338-47-8
- GOSTEIN MICHAEL ET AL: "Evaluating a model to estimate GHI, DNI, & DHI from POA irradiance", 2017 IEEE 44TH PHOTOVOLTAIC SPECIALIST CONFERENCE (PVSC), IEEE, 25 June 2017 (2017-06-25), pages 1 - 4, XP033350105, DOI: 10.1109/PVSC.2017.8366160

## Beschreibung

### Stand der Technik

Die Erfindung betrifft ein Verfahren sowie eine Vorrichtung zur Bestimmung einer globalen Bestrahlungsstärke solarer Strahlung und/oder wenigstens einer ihrer Komponenten, in einer horizontalen Ebene und/oder in einer zu der horizontalen Ebene geneigten Ebene, wobei die Komponenten direkte Strahlung, diffuse Strahlung, am Boden reflektierte Strahlung umfassen.

Für solartechnische Anwendungen z.B. mit fixierten oder nachgeführten Flachkollektoren oder Photovoltaik-Modulen, sind genaue Messungen einer globalen Bestrahlungsstärke solarer Strahlung in beliebigen Ebenen (GTI) und in hoher zeitlicher Auflösung von großem Interesse.

Pyranometer können verwendet werden, um die Bestrahlungsstärke aus dem Halbraum über der Sensorebene zu messen. Pyranometer liefern recht genaue Messungen der GTI, allerdings nur für die bei der Installation des Pyranometers genutzte Ebene.

So ist beispielsweise aus der US 20160334123 A1 eine Vorrichtung bekannt, bei der ein Pyranometer zur Messung einer Bestrahlungsstärke solarer Strahlung eingesetzt wird. Alternativ wird das Pyranometer durch eine Kamera ersetzt.

Da die Strahlungsmessungen schon vor Bau eines Solarkraftwerks zur Planung nötig sind und zu diesem Zeitpunkt der ideale Neigungswinkel oder die Nachführungsform der Kollektoren noch nicht bekannt ist, sind geneigte Pyranometer alleine nicht ausreichend.

Außerdem ist für die akkurate Modellierung von Solarkraftwerken oder dem Energieeintrag in Gebäuden auch eine Aufteilung der globalen Bestrahlungsstärke in der geneigten Ebene (GTI) in direkte Normalstrahlung (DNI) und diffuse Bestrahlungsstärke in der geneigten Ebene (DifTI) sinnvoll. In der Praxis wird die GTI daher aus einer Messung der globalen Bestrahlungsstärke in einer horizontalen Ebene (GHI) oder der DNI und GHI über Transpositionsmodelle geschätzt. Zur Messung von DNI und einer horizontalen Diffusstrahlung (DHI) ist zusätzliche, aufwendige und wartungsintensive Messtechnik erforderlich. Ein der Sonne nachgeführtes Pyrheliometer misst die DNI. Ein Pyranometer mit der Sonne nachgeführtem Schattenball misst die DHI. Falls nur GHI gemessen wird, können DNI und DHI über ein Dekompositionsmodell gewonnen werden. Die Verwendung von Transpositions- und insbesondere Dekompositionsmodellen ist dabei mit großen Fehlern verbunden.

Wolkenkameras wurden genutzt, um die absolute Strahlungsdichte- oder Radianzverteilung des Himmels kontinuierlich über alle Winkelbereiche und in hoher zeitlicher Auflösung zu bestimmen. Dafür wurden spezielle Labor-Aufbauten mit zusätzlichem Tracker, Schattenband oder einer eigens konstruierten Wolkenkamera genutzt.

Beispielhaft werden folgende Publikationen genannt: López-Álvarez, M. A. et al., "Using a trichromatic CCD camera for spectral skylight estimation", Applied Optics, 2008, vol. 47(34), H31-H38.); Rossini, E. G., Krenzinger, A., "Maps of sky relative radiance and luminance distributions acquired with a monochromatic CCD camera", Solar Energy, 2007, vol. 81(11), 1323-1332; doi:10.1016/j.solener.2007.06.013), Schade, N. H. et al., "Enhanced solar global irradiance during cloudy sky conditions", Meteorologische Zeitschrift, 2007, vol. 16(3), 295-303; Feister, U. et al., "Ground-based cloud images and sky radiances in the visible and near infrared region from whole sky imager measurements", EUMETSAT Satellite Application Facility Workshop, German Weather Service and World Meteorological Organization, 2000.

Radianzverteilungen des Himmels wurden als Referenz zur Wolkenerkennung genutzt, wie beispielsweise in der Veröffentlichung von Cazorla, A. et al., "Development of a sky imager for cloud cover assessment". JOSA A, 2008, vol. 25(1), 29-39, beschrieben ist.

In der Literatur beschriebene Kamerasysteme können die Radianzverteilung des Himmels allerdings nur außerhalb der Sonnenscheibe bestimmen. Verschiedene Systeme ermitteln die DNI aus Kamerabildern. Maschinelles Lernen (Machine Learning) wurde eingesetzt, um DNI und DHI aus Kamerabildern abzuleiten, siehe beispielsweise Schmidt, T., et al., "Retrieving direct and diffuse radiation with the use of sky imager pictures", 2015, EGU General Assembly Conference Abstracts.

Die DHI wurde berechnet aus der Radianzverteilung des Himmels, welche aus dem Bild einer speziell konstruierten Wolkenkamera bestimmt wird, und die DNI aus einem "Verschmier"-Effekt der Sonnenscheibe im Kamerabild geschätzt, siehe beispielsweise Kurtz, B., Kleissl, J. "Measuring diffuse, direct, and global irradiance using a sky imager", Solar Energy, 2017, vol. 141, 311-322.

Aus beiden Anteilen zusammen kann eine Bestimmung der globalen Bestrahlungsstärke in der horizontalen Ebene (GHI) vorgenommen werden.

### Offenbarung der Erfindung

Die Aufgabe der Erfindung ist es, ein verbessertes Verfahren zur Bestimmung einer globalen Bestrahlungsstärke solarer Strahlung und/oder wenigstens einer ihrer Komponenten in einer horizontalen Ebene als auch in einer zur horizontalen Ebene geneigten Ebene bereitzustellen.

Eine weitere Aufgabe ist es, eine Vorrichtung zur Durchführung eines solchen Verfahrens zu schaffen.

Die Aufgaben werden durch die Merkmale der unabhängigen Ansprüche gelöst. Günstige Ausgestaltungen und Vorteile der Erfindung ergeben sich aus den weiteren Ansprüchen, der Beschreibung und der Zeichnung.

Nach einem Aspekt der Erfindung wird ein Verfahren vorgeschlagen zur Bestimmung einer globalen Bestrahlungsstärke solarer Strahlung und/oder wenigstens einer ihrer Komponenten in einer horizontalen Ebene und/oder in einer zu der horizontalen Ebene geneigten Ebene, wobei die Komponenten direkte Strahlung, diffuse Strahlung, am Boden reflektierte Strahlung umfassen, mit einer Vorrichtung, umfassend wenigstens eine Strahlungssensoreinheit, eine Kamera, sowie eine Auswerteeinheit, welche zur Auswertung von Messdaten der Strahlungssensoreinheit und/oder der Kamera vorgesehen ist.

Aus der Bestrahlungsstärke solarer Strahlung der Strahlungssensoreinheit und der winkelaufgelösten Strahlungsinformation der Kamera wird die globale Bestrahlungsstärke und/oder in eine oder mehrere ihrer Komponenten in der horizontalen Ebene und/oder in einer zu einer horizontalen Ebene geneigten Ebene umgerechnet.

Vorteilhaft können Strahlungssensoreinheit und Kamera denselben Bereich über der horizontalen Ebene erfassen. Die jeweilige Ebene stellt die Begrenzung des jeweiligen Sichtfelds der Kamera bzw. der Strahlungssensoreinheit dar.

Die Strahlungssensoreinheit und die Kamera können beispielsweise auf einer Achse angeordnet werden, welche typischerweise in einer Nord-Süd-Richtung ausgerichtet ist. Die Strahlungssensoreinheit ist in diesem Fall auf der nördlichen Erd-Hemisphäre nördlich der Kamera und auf der südlichen Erd-Hemisphäre südlich der Kamera angeordnet.

Als Strahlungssensoreinheit kann vorteilhaft ein Pyranometer, insbesondere ein Thermopile-Pyranometer und als Kamera eine Wolkenkamera, wie beispielsweise eine Mobotix-Q25-Überwachungskamera, eingesetzt werden. Beide Instrumente sind in einer vorteilhaften Ausgestaltung in unmittelbarer Nähe zueinander horizontal nivelliert auf gleicher Höhe angeordnet.

Die Rot-Grün-Blau (RGB)-Farbkanäle des Kamerabildes werden gewichtet summiert. Die Gewichtung der Kanäle bewirkt dabei eine möglichst gleichmäßige Sensitivität der Kamera im sichtbaren Wellenlängenbereich. Dieser Grauwert wird mit einer Breitbandkorrektur multipliziert, um Strahlung bei Wellenlängen außerhalb des Messbereichs der Kamera zu berücksichtigen.

Hierbei ist die Strahlungssensoreinheit in einer Ebene angeordnet, wobei die Strahlungssensoreinheit die Bestrahlungsstärke solarer Strahlung in einem Sichtfeld von 180° über der Ebene bestimmt,
wobei die Kamera in einer Ebene angeordnet ist, wobei die Kamera ein Sichtfeld von 180° über einer Ebene erfasst, wobei die Strahlungssensoreinheit und die Kamera am gleichen Standort angeordnet sind, wobei die Bestrahlungsstärke solarer Strahlung mittels der Strahlungssensoreinheit in der Ebene der Strahlungssensoreinheit gemessen wird, wobei die Kamera eine Aufnahme des Himmels in dem Sichtfeld erfasst und das Kamerabild ein Bild des Himmels ist, welches RGB-Kanäle aufweist. Dabei wird eine globale Bestrahlungsstärke der Sonnenstrahlung gemessen und in die globale Bestrahlungsstärke und/oder in eine oder mehrere ihrer Komponenten in der horizontalen Ebene und/oder in einer zu einer horizontalen Ebene geneigten Ebene umgerechnet. Hierbei erfolgt eine Bestimmung der diffusen Strahlung in der horizontalen und/oder geneigten Ebene, insbesondere in der Ebene der Strahlungssensoreinheit, mit den Schritten:
(i) Bestimmen eines Breitband-Korrekturfaktors aus dem Verhältnis breitbandiger Strahlung zu von der Kamera registriertem Anteil mittels des Tageslichtspektrums und der spektralen Sensitivität von RGB-Kanälen der Kamera;
(ii) Bestimmen von Gewichten der RGB-Kanäle entsprechend der inversen Sensitivität mittels der Aufnahmeeinstellungen der Kamera;
(iii) Summieren der gewichteten RGB-Kanäle des Kamerabilds;
(iv) Multiplizieren der summierten RGB-Kanäle mit dem Breitband-Korrekturfaktor;
(v) Zuordnen von Winkelbereichen des Himmels zu Bildpixeln der Kamera mittels interner und/oder externer Kalibrationswerte der Kamera;
(vi) Gewichten der Bildbereiche entsprechend der Projektion in die horizontale und/oder geneigte Ebene;
(vii) Bestimmen des Winkelbereichs des Sichtfeldes der horizontalen und/oder geneigten Ebene aus deren Neigung und Ausrichtung sowie aus der Neigung und Ausrichtung des Sensors der Kamera;
(viii) Bestimmen des Winkelbereichs der Sonnenscheibe aus Standort und Uhrzeit;
(ix) Ausschließen des Winkelbereichs der Sonnenscheibe aus dem Winkelbereich des Sichtfelds der horizontalen und/oder geneigten Ebene;
(x) Integrieren der Bildbereiche über das Sichtfeld;
(xi) Bestimmen der diffusen Strahlung in der horizontalen und/oder geneigten Ebene, insbesondere in der Ebene der Strahlungssensoreinheit (10), durch Multiplikation mit einem Korrekturfaktor der Kamerasensitivität. Vorteilhaft können Strahlungssensoreinheit und Kamera denselben Bereich über der horizontalen Ebene erfassen. Die jeweilige Ebene stellt die Begrenzung des jeweiligen Sichtfelds der Kamera bzw. der Strahlungssensoreinheit dar.

Die Strahlungssensoreinheit und die Kamera können beispielsweise auf einer Achse angeordnet werden, welche typischerweise in einer Nord-Süd-Richtung ausgerichtet ist. Die Strahlungssensoreinheit ist in diesem Fall auf der nördlichen Erd-Hemisphäre nördlich der Kamera und auf der südlichen Erd-Hemisphäre südlich der Kamera angeordnet.

Als Strahlungssensoreinheit kann vorteilhaft ein Pyranometer, insbesondere ein Thermopile-Pyranometer und als Kamera eine Wolkenkamera, wie beispielsweise eine Mobotix-Q25-Überwachungskamera, eingesetzt werden. Beide Instrumente sind in einer vorteilhaften Ausgestaltung in unmittelbarer Nähe zueinander horizontal nivelliert auf gleicher Höhe angeordnet.

Die Rot-Grün-Blau (RGB)-Farbkanäle des Kamerabildes werden gewichtet summiert. Die Gewichtung der Kanäle bewirkt dabei eine möglichst gleichmäßige Sensitivität der Kamera im sichtbaren Wellenlängenbereich. Dieser Grauwert wird mit einer Breitbandkorrektur multipliziert, um Strahlung bei Wellenlängen außerhalb des Messbereichs der Kamera zu berücksichtigen.

Unter Verwendung einer für Wolkenkameras standardmäßigen geometrischen internen und externen Kalibrierung wird für jedes Pixel des Kamerabilds ein Himmelsbereich angegeben (Azimuth und Zenithwinkel). So ergibt sich eine Schätzung der Radianzverteilung des Himmels.

Analog zur Radianzverteilung wird eine Leuchtdichte-Verteilung berechnet. Hierzu werden die RGB-Farbkanäle vor der Summation entsprechend der Sensitivität des menschlichen Auges gewichtet. Integration der Leuchtdichte-Verteilung über alle Winkelbereiche liefert einen Messwert der Beleuchtungsstärke. Die von der Kamera ausgegebene und über das Kamerabild berechnete Beleuchtungsstärke werden verglichen. Die Radianzverteilung wird entsprechend dem Verhältnis beider Werte skaliert, um einen Einfluss der Kamerasteuerung auf die Sensitivität der Kamera auszugleichen.

Der Bereich der Sonnenscheibe wird maskiert. Für eine ausgewertete horizontale oder geneigte Ebene wird jeder Himmelsbereich im Radianzbild entsprechend einer Projektion in die Ebene gewichtet. Integration der Radianzverteilung über alle Himmelsbereiche, welche im Sichtfeld der geneigten Ebene liegen, liefert die aus dem Himmel stammende diffuse Bestrahlungsstärke der jeweiligen Ebene.

Die horizontale diffuse Bestrahlungsstärke (DHI) wird entsprechend berechnet. Auch die diffuse Bestrahlungsstärke in der Ebene des Pyranometers wird entsprechend berechnet. Aus dem Vergleich zur mittels Pyranometer gemessenen globalen Bestrahlungsstärke und unter Kenntnis des aktuellen Sonnenstands wird die direkte Normalstrahlung (DNI) berechnet.

In einer vorteilhaften Ausführung kann das Pyranometer horizontal angeordnet werden. In diesem Fall misst das Pyranometer direkt die globale Bestrahlungsstärke in der horizontalen Ebene (GHI). Andernfalls kann GHI analog zur globalen Bestrahlungsstärke in der geneigten Ebene (GTI), basierend auf der Messung des Pyranometers und dem Bild der Wolkenkamera berechnet werden.

Zur Korrektur von Brechungseffekten in der Linse der Kamera werden der erste Schätzwert der DHI sowie alle übrigen berechneten diffusen Bestrahlungsstärken, insbesondere auch die diffuse Bestrahlungsstärke in der Ebene des Pyranometers, um einen Anteil der DNI reduziert. Anschließend wird die DNI neu berechnet.

Die GTI in einer ausgewerteten Ebene ergibt sich schließlich aus einem direkten Anteil, einem diffusen Anteil vom Himmel und einem am Boden reflektierten Anteil. Die DNI wird in die ausgewertete Ebene projiziert und ergibt somit den direkten Anteil. Die diffuse Bestrahlungsstärke wird wie oben beschrieben aus dem Kamerabild für diese Ebene berechnet. Der reflektierte Anteil ergibt sich als GHI multipliziert mit der Albedo des Untergrunds und dem Term $\left(1-cos\left(Neigungswinkel der geneigten Ebene gegen die Horizontale\right)\right) / 2 .$

Nach einer günstigen Ausgestaltung des Verfahrens kann zur Umrechnung der mit der Strahlungssensoreinheit bestimmten globalen Bestrahlungsstärke der Sonnenstrahlung in der Ebene der Strahlungssensoreinheit in die globale Bestrahlungsstärke und/oder in wenigstens eine ihrer Komponenten in der horizontalen Ebene und/oder in der zu der horizontalen Ebene geneigten Ebene i, wenigstens eine der Größen von am Boden reflektierter Strahlung, und/oder diffuser Strahlung in der horizontalen Ebene und/oder in der zu der horizontalen Ebene geneigten Ebene, insbesondere in der Ebene der Strahlungssensoreinheit, und/oder des Sonnenstands bei der Strahlungsmessung, und/oder einem sensorspezifischen Korrekturfaktor, welcher insbesondere Linsenparameter der Kamera umfasst, herangezogen werden. Hierbei können die Strahlungsmessung beeinflussende Faktoren des Sonnenstands bei der Umrechnung berücksichtigt werden.

Auf diese Weise lassen sich die globale Bestrahlungsstärke und deren Komponenten in einer horizontalen und/oder geneigten Ebene mit hoher Genauigkeit aus den Messdaten der Strahlungssensoreinheit zusammen mit den Messdaten der Kamera bestimmen.

Nach einer günstigen Ausgestaltung des Verfahrens kann zur Umrechnung von Messwerten der Kamera wenigstens eine der Größen von einem Verhältnis einer breitbandigen Strahlung zu von der Kamera registriertem Anteil der Strahlung, und/oder einer internen und/oder externen Kalibration der Kamera, und/oder einer Neigung und Ausrichtung des Sensors der Kamera, und/oder einer Neigung und Ausrichtung der geneigten Ebene, und/oder des Sonnenstands bei der Strahlungsmessung und/oder einer Kamerasensitivität, welche aus einer Beleuchtungsstärke der Kamera und/oder der spektralen Sensitivität der RGB-Kanäle und/oder Aufnahmeeinstellungen und/oder dem RGB-Kamerabild und/oder der internen und/oder externen Kalibration der Kamera bestimmt wird, herangezogen werden.

Hierbei können die Strahlungsmessung beeinflussende Faktoren des Sonnenstands bei der Umrechnung berücksichtigt werden. Auf diese Weise lässt sich die globale Bestrahlungsstärke und deren Komponenten in der horizontalen und/oder geneigten Ebene mit hoher Genauigkeit aus den Messdaten der Kamera zusammen mit den Messdaten der Strahlungssensoreinheit bestimmen.

Nach einer günstigen Ausgestaltung des Verfahrens kann Bildinformation der Kamera zur Umrechnung der globalen Bestrahlungsstärke in der Ebene der Strahlungssensoreinheit in die globale Bestrahlungsstärke und/oder in wenigstens eine ihrer Komponenten in einer anderen horizontalen und/oder geneigten Ebene einbezogen werden. Insbesondere kann dabei die Kombination der Bildinformation der Kamera und von Messwerten der Strahlungssensoreinheit zur Reduktion der durch Bildartefakte verursachten Unsicherheit eingesetzt werden. Dadurch kann die Genauigkeit des Verfahrens erhöht werden.

Nach einer günstigen Ausgestaltung des Verfahrens kann die Bestimmung der direkten Sonnenstrahlung als einer Komponente der globalen Bestrahlungsstärke in einer beliebigen Ebene erfolgen mit den Schritten:
(i) Bestimmen einer am Boden reflektierten Strahlung mittels Albedo, Neigung und Ausrichtung der geneigten Ebene, sowie eines Messwerts der globalen Bestrahlungsstärke in der Ebene der Strahlungssensoreinheit; (ii) Bestimmen einer direkten Strahlung in der Ebene der Strahlungssensoreinheit durch Subtraktion des Messwerts der diffusen Strahlung, ausgewertet für die Ebene der Strahlungssensoreinheit und der am Boden reflektierten Strahlung, ausgewertet für die Ebene der Strahlungssensoreinheit, von der globalen Bestrahlungsstärke in der Ebene der Strahlungssensoreinheit;
(iii) Bestimmen einer direkten Normalstrahlung durch Umkehren der Projektion in die Ebene der Strahlungssensoreinheit mittels aus Standort und Uhrzeit berechnetem Sonnenstand; (iv) Bestimmen einer Linsenbrechungskorrektur durch Multiplizieren der direkten Normalstrahlung mit einem Korrekturfaktor, welcher insbesondere Linsenparameter der Kamera umfasst; (v) Bestimmen der korrigierten direkten Strahlung durch Addieren der direkten Strahlung in der Ebene der Strahlungssensoreinheit und der Linsenbrechungskorrektur sowie Umkehren der Projektion in die Ebene der Strahlungssensoreinheit und Projektion in die beliebige Ebene.

Nach einer günstigen Ausgestaltung des Verfahrens kann die Bestimmung der diffusen Strahlung der Sonnenstrahlung als einer Komponente der globalen Bestrahlungsstärke in einer beliebigen Ebene erfolgen mit den Schritten:
(i) Bestimmen einer am Boden reflektierten Strahlung mittels Albedo, Neigung und Ausrichtung der geneigten Ebene, sowie eines Messwerts der globalen Bestrahlungsstärke in der Ebene der Strahlungssensoreinheit; (ii) Bestimmen der direkten Strahlung in der Ebene der Strahlungssensoreinheit durch Subtraktion des Messwerts der diffusen Strahlung, ausgewertet für die Ebene der Strahlungssensoreinheit und der am Boden reflektierten Strahlung, ausgewertet für die Ebene der Strahlungssensoreinheit, von der globalen Bestrahlungsstärke in der Ebene der Strahlungssensoreinheit; (iii) Bestimmen einer direkten Normalstrahlung durch Umkehren der Projektion in die Ebene der Strahlungssensoreinheit mittels aus Standort und Uhrzeit berechnetem Sonnenstand; (iv) Bestimmen einer Linsenbrechungskorrektur durch Multiplizieren der direkten Normalstrahlung mit einem Korrekturfaktor, welcher insbesondere Linsenparameter der Kamera umfasst; (vi) Bestimmen der korrigierten Strahlung in der beliebigen Ebene durch Subtrahieren der Linsenbrechungskorrektur von der diffusen Strahlung, ausgewertet für die beliebige Ebene.

Nach einer günstigen Ausgestaltung des Verfahrens kann die Bestimmung der globalen Bestrahlungsstärke der Sonnenstrahlung in der horizontalen und/oder geneigten Ebene erfolgen mit den Schritten:
(i) Bestimmen einer am Boden reflektierten Strahlung mittels Albedo, Neigung und Ausrichtung der geneigten Ebene, sowie eines Messwerts der globalen Bestrahlungsstärke in der Ebene der Strahlungssensoreinheit; (ii) Bestimmen der direkten Strahlung in der Ebene der Strahlungssensoreinheit durch Subtraktion des Messwerts der diffusen Strahlung, ausgewertet aus den Messdaten der Kamera für die Ebene der Strahlungssensoreinheit und der am Boden reflektierten Strahlung, ausgewertet für die Ebene der Strahlungssensoreinheit, von der globalen Bestrahlungsstärke in der Ebene der Strahlungssensoreinheit; (iii) Bestimmen einer direkten Normalstrahlung durch Umkehren der Projektion in die Ebene der Strahlungssensoreinheit mittels aus Standort und Uhrzeit berechnetem Sonnenstand; (iv) Bestimmen einer Linsenbrechungskorrektur durch Multiplizieren der direkten Normalstrahlung mit einem Korrekturfaktor, welcher Linsenparameter der Kamera umfasst; (v) Addieren der direkten Strahlung in der Ebene der Strahlungssensoreinheit und der Linsenbrechungskorrektur sowie Umkehren der Projektion in die Ebene der Strahlungssensoreinheit und Projektion in die horizontale und/oder geneigte Ebene; (vi) Subtrahieren der Linsenbrechungskorrektur von der diffusen Strahlung, ausgewertet für die horizontale und/oder geneigte Ebene; (vii) Bestimmen der globalen Bestrahlungsstärke in der horizontalen und/oder geneigten Ebene durch Summieren der am Boden reflektierten Strahlung, der direkten Strahlung in der horizontalen und/oder geneigten Ebene, sowie der diffusen Strahlung, ausgewertet für die horizontale und/oder geneigte Ebene. Damit lässt sich die globale Bestrahlungsstärke in einer horizontalen und/oder geneigten Ebene mit hoher Genauigkeit aus den Messdaten der Strahlungssensoreinheit zusammen mit den Messdaten der Kamera bestimmen.

Die Linsenbrechung bewirkt eine Überschätzung der diffusen Strahlung und damit eine Unterschätzung der direkten Strahlung. Dieser Effekt kann korrigiert werden, indem die Überschätzung von der diffusen Strahlung abgezogen wird und auf die direkte Strahlung aufgeschlagen wird.

Erfindungsgemäß erfolgt eine Bestimmung der diffusen Strahlung in der horizontalen und/oder geneigten Ebene, insbesondere in der Ebene der Strahlungssensoreinheit, erfolgen mit den Schritten: (i) Bestimmen eines Breitband-Korrekturfaktors aus dem Verhältnis breitbandiger Strahlung zu von der Kamera registriertem Anteil mittels des Tageslichtspektrums und der spektralen Sensitivität von RGB-Kanälen der Kamera; (ii) Bestimmen von Gewichten der RGB-Kanäle entsprechend der inversen Sensitivität mittels der Aufnahmeeinstellungen der Kamera; (iii) Summieren der gewichteten RGB-Kanäle des Kamerabilds; (iv) Multiplizieren der summierten RGB-Kanäle mit dem Breitband-Korrekturfaktor; (v) Zuordnen von Winkelbereichen des Himmels zu Bildpixeln der Kamera mittels interner und/oder externer Kalibrationswerte der Kamera; (vi) Gewichten der Bildbereiche entsprechend der Projektion in die horizontale und/oder geneigte Ebene; (vii) Bestimmen des Winkelbereichs des Sichtfeldes der horizontalen und/oder geneigten Ebene aus deren Neigung und Ausrichtung sowie aus der Neigung und Ausrichtung des Sensors der Kamera; (viii) Bestimmen des Winkelbereichs der Sonnenscheibe aus Standort und Uhrzeit; (ix) Ausschließen des Winkelbereichs der Sonnenscheibe aus dem Winkelbereich des Sichtfelds der horizontalen und/oder geneigten Ebene; (x) Integrieren der Bildbereiche über das Sichtfeld; (xi) Bestimmen der diffusen Strahlung in der horizontalen und/oder geneigten Ebene, insbesondere in der Ebene der Strahlungssensoreinheit, durch Multiplikation mit einem Korrekturfaktor der Kamerasensitivität.

Damit lassen sich die globale Bestrahlungsstärke sowie die diffuse Strahlung in der horizontalen und/oder geneigten Ebene sowie die direkte Strahlung mit hoher Genauigkeit aus den Messdaten der Strahlungssensoreinheit zusammen mit den Messdaten der Kamera bestimmen.

Nach einer günstigen Ausgestaltung des Verfahrens kann eine Bestimmung des Korrekturfaktors der Kamerasensitivität erfolgen mit den Schritten: (i) Bestimmen von Gewichten entsprechend der Sensitivität jedes RGB-Kanals der Kamera mittels der spektralen Sensitivität der RGB-Kanäle und den Aufnahmeeinstellungen der Kamera; (ii) Bestimmen von Gewichten entsprechend der menschlichen Wahrnehmung; (iii) Aufsummieren der gewichteten RGB-Kanäle aus dem RGB-Kamerabild; (iv) Zuordnen von Winkelbereichen des Himmels zu Bildpixeln der Kamera mittels der internen und/oder externen Kalibrationswerte der Kamera; (v) Integrieren der gewichteten RGB-Kanäle über die Hemisphäre des Himmels über der Ebene der Kamera; (vi) Bestimmen des Korrekturfaktors der Kamerasensitivität durch Berechnung des Verhältnisses aus der Beleuchtungsstärke der Kamera und dem integrierten gewichteten RGB-Kamerabild. Damit lassen sich die globale Bestrahlungsstärke sowie die diffuse Strahlung in der horizontalen und/oder geneigten Ebene sowie die direkte Strahlung mit hoher Genauigkeit aus den Messdaten der Kamera zusammen mit den Messdaten der Strahlungssensoreinheit bestimmen.

Nach einem weiteren Aspekt wird eine Vorrichtung vorgeschlagen zur Durchführung eines Verfahrens zur Bestimmung einer globalen Bestrahlungsstärke solarer Strahlung und/oder wenigstens einer ihrer Komponenten, in einer Ebene, insbesondere in einer horizontalen Ebene und/oder in einer zu der horizontalen Ebene geneigten Ebene, wobei die Komponenten direkte Strahlung, diffuse Strahlung, am Boden reflektierte Strahlung umfassen, umfassend wenigstens eine Strahlungssensoreinheit, eine Kamera, sowie eine Auswerteeinheit, welche zur Auswertung von Messdaten der Strahlungssensoreinheit und/oder der Kamera vorgesehen ist.

Die Strahlungssensoreinheit ist zur Bestimmung der Bestrahlungsstärke solarer Strahlung in einem Sichtfeld von 180° über einer Ebene der Strahlungssensoreinheit vorgesehen. Die Kamera ist zur Erfassung eines Sichtfelds von 180° über einer Ebene der Kamera vorgesehen. Es wird ein kombinierter Messaufbau von Strahlungssensoreinheit und Kamera am gleichen Standort genutzt.

Dabei wird eine globale Bestrahlungsstärke der Sonnenstrahlung in einer Ebene der Strahlungssensoreinheit gemessen und in die globale Bestrahlungsstärke in einer zur Ebene der Strahlungssensoreinheit geneigten Ebene und/oder in eine oder mehrere der Komponenten der globalen Bestrahlungsstärke in der horizontalen Ebene und/oder in der zu der horizontalen Ebene geneigten Ebene umgerechnet. Bildinformation der Kamera wird zur Umrechnung der globalen Bestrahlungsstärke in der Ebene der Strahlungssensoreinheit in die globale Bestrahlungsstärke und/oder in wenigstens eine ihrer Komponenten in dieser Ebene oder in der horizontalen Ebene und/oder in der zu der horizontalen Ebene geneigten Ebene aus den Messdaten der Strahlungssensoreinheit einbezogen, indem zur Umrechnung von Messwerten der Kamera eine Intensität von RGB-Kanälen der Kamera herangezogen wird.

Nach einem weiteren Aspekt der Erfindung wird eine Vorrichtung vorgeschlagen zur Durchführung eines Verfahrens zur Bestimmung einer globalen Bestrahlungsstärke solarer Strahlung und/oder wenigstens einer ihrer Komponenten, in einer Ebene, insbesondere in einer horizontalen Ebene und/oder in einer zu der horizontalen Ebene geneigten Ebene, wobei die Komponenten direkte Strahlung, diffuse Strahlung, am Boden reflektierte Strahlung umfassen, umfassend wenigstens eine Strahlungssensoreinheit, eine Kamera, sowie eine Auswerteeinheit, welche zur Auswertung von Messdaten der Strahlungssensoreinheit und/oder der Kamera eingerichtet ist
wobei die Strahlungssensoreinheit in einer Ebene angeordnet ist,
wobei die Strahlungssensoreinheit die Bestrahlungsstärke solarer Strahlung in einem Sichtfeld von 180° über der Ebene bestimmt,
   wobei die Kamera in einer Ebene angeordnet ist
wobei die Kamera ein Sichtfelds von 180° über der Ebene erfasst,
wobei die Strahlungssensoreinheit und die Kamera in einem kombinierten Messaufbau am gleichen Standort angeordnet sind,
wobei die Bestrahlungsstärke solarer Strahlung mittels der Strahlungssensoreinheit in der Ebene der Strahlungssensoreinheit gemessen wird,
wobei die Kamera eine Aufnahme des Himmels in dem Sichtfeld erfasst und das Kamerabild ein Bild des Himmels ist, welches RGB-Kanäle aufweist, wobei die Kamera eine Aufnahme des Himmels in dem Sichtfeld erfasst und das Kamerabild ein Bild des Himmels ist, welches RGB-Kanäle aufweist,
wobei eine Bestimmung der diffusen Strahlung in der horizontalen und/oder geneigten Ebene, insbesondere in der Ebene der Strahlungssensoreinheit, mit den Schritten erfolgt,

(i) Bestimmen eines Breitband-Korrekturfaktors aus dem Verhältnis breitbandiger Strahlung zu von der Kamera registriertem Anteil mittels des Tageslichtspektrums und der spektralen Sensitivität von RGB-Kanälen der Kamera;
(ii) Bestimmen von Gewichten der RGB-Kanäle entsprechend der inversen Sensitivität mittels der Aufnahmeeinstellungen der Kamera;
(iii) Summieren der gewichteten RGB-Kanäle des Kamerabilds;
(iv) Multiplizieren der summierten RGB-Kanäle mit dem Breitband-Korrekturfaktor;
(v) Zuordnen von Winkelbereichen des Himmels zu Bildpixeln der Kamera mittels interner und/oder externer Kalibrationswerte der Kamera;
(vi) Gewichten der Bildbereiche entsprechend der Projektion in die horizontale und/oder geneigte Ebene;
(vii) Bestimmen des Winkelbereichs des Sichtfeldes der horizontalen und/oder geneigten Ebene aus deren Neigung und Ausrichtung sowie aus der Neigung und Ausrichtung des Sensors der Kamera;
(viii) Bestimmen des Winkelbereichs der Sonnenscheibe aus Standort und Uhrzeit;(ix) Ausschließen des Winkelbereichs der Sonnenscheibe aus dem Winkelbereich des Sichtfelds der horizontalen und/oder geneigten Ebene;
(x) Integrieren der Bildbereiche über das Sichtfeld;
(xi) Bestimmen der diffusen Strahlung in der horizontalen und/oder geneigten Ebene, insbesondere in der Ebene der Strahlungssensoreinheit, durch Multiplikation mit einem Korrekturfaktor der Kamerasensitivität.

Die Strahlungssensoreinheit ist zur Bestimmung der Bestrahlungsstärke solarer Strahlung in einem Sichtfeld von 180° über einer Ebene vorgesehen. Die Kamera ist zur Erfassung eines Sichtfelds von 180° über einer Ebene vorgesehen.

Die Strahlungssensoreinheit und die Kamera können vorteilhaft auf einer Nord-Süd-Achse angeordnet sein. Dabei kann in diesem Fall die Strahlungssensoreinheit auf der nördlichen Erd-Hemisphäre nördlich der Kamera und auf der südlichen Erd-Hemisphäre südlich der Kamera angeordnet sein.

Als Strahlungssensoreinheit kann vorteilhaft ein Pyranometer, insbesondere ein Thermopile-Pyranometer und als Kamera eine Wolkenkamera wie beispielsweise eine Mobotix-Q25-Überwachungskamera eingesetzt werden. Beide Instrumente sind vorteilhaft in unmittelbarer Nähe zueinander horizontal nivelliert auf gleicher Höhe angeordnet. Zusätzlich ist der Aufstellungsort zweckmäßig so zu wählen, dass weitere Hindernisse in den Sichtfeldern von Strahlungssensoreinheit und Kamera vermieden werden.

Erfindungsgemäß kann mit einem fixen Aufbau der Vorrichtung die globale Bestrahlungsstärke solarer Strahlung (GTI) und die diffuse Strahlung in horizontalen und/oder geneigten Ebenen sowie die direkte Strahlung unter Verwendung eines Bildes des Himmels und des Pyranometers bestimmt werden. Die GTI, die direkte Strahlung und die diffuse Strahlung können für beliebig viele Neigungswinkel als auch Azimuth-Orientierungen der Ebenen bestimmt werden. Auch zeitliche Änderungen der Winkel sind möglich, um die Ebenen nachgeführter Empfänger auszuwerten.

Das Bild des Himmels liefert in Echtzeit die Radianzverteilung des Himmels unter Ausschluss der Sonnenscheibe. Durch eine angepasste Gewichtung und Integration der Radianzverteilung können die diffuse Bestrahlungsstärke (DHI) in der horizontalen Ebene und der vom Himmel stammende Teil der diffusen Bestrahlungsstärke (DifTI) in beliebigen weiteren Ebenen bestimmt werden. Aus der vom Pyranometer gemessenen globalen Bestrahlungsstärke und der für diese Ebene aus dem Kamerabild berechneten diffusen Strahlung kann die DNI unter Verwendung des bekannten Sonnenstandes berechnet werden. Daraus lässt sich die GTI bestimmen. Der direkte Anteil der Bestrahlungsstärke DNI wird rein geometrisch in die gefragte Ebene projiziert. Der diffuse Anteil aus dem Himmel DifTI wird über die oben beschriebene gewichtete Integration gewonnen. Der vom Boden reflektierte Anteil der Bestrahlungsstärke in die geneigte Ebene wird unter Schätzung der Albedo des Bodens und der bekannten Globalstrahlung GHI bestimmt.

Mittels der erfindungsgemäßen Vorrichtung kann die Radianzverteilung des Himmels direkt über das Kamerabild bestimmt werden. Im Gegensatz zum Stand der Technik werden bei der Vorrichtung keine beweglichen Teile zur genauen Bestimmung der DNI und der DHI verwendet, wodurch der Aufbau deutlich günstiger und robuster erfolgen kann.

Mittels der Vorrichtung aus Kamera und Pyranometer kann die globale Bestrahlungsstärke in der Ebene des Pyranometers direkt über dieses bestimmt werden. Im Fall eines horizontal angeordneten Pyranometers misst dieses direkt die GHI. Das Kamerabild wird genutzt, um die diffuse Bestrahlungsstärke in beliebigen Ebenen zu bestimmen.

Die mittels Pyranometer gemessene globale Strahlung kann somit im vorliegenden Fall mit hoher Genauigkeit in die Bestrahlungsstärke in einer beliebigen Ebene umgerechnet werden. Die Berechnung der GTI und hierfür der diffusen Strahlung in geneigten Ebenen erfolgt über eine angepasste Integration der Radianzverteilung.

Vorteilhaft kann für das Messsystem ein handelsübliches Pyranometer sowie eine preisgünstige Fischaugen-Überwachungskamera genutzt werden. Um eine solche Kamera für Messungen der Radianzverteilung des Himmels nutzen zu können, kann die Belichtungssteuerung der Kamera gezielt angepasst werden. Mittels eines geeigneten Parametersatzes der Kamerasteuerung kann gewährleistet werden, dass für die Messung relevante Bildeigenschaften unabhängig von der beobachteten Szenerie weitgehend konstant bleiben. Statt einer zusätzlichen individuellen radiometrischen Kalibration jeder Wolkenkamera gleicht das vorliegende Messsystem im laufenden Betrieb einen von der Kamera ausgegebenen Diagnose-Wert der Beleuchtungsstärke mit einem über das Kamerabild berechneten Wert ab. Hierdurch wird die Sensitivität der Kamera in Echtzeit korrigiert. Bei der Berechnung wird eine Korrektur für die Kamerabildverstärkung angewandt.

Das hier beschriebene Messsystem nutzt einen kombinierten Messaufbau von Pyranometer und Kamera am gleichen Standort.

Durch diese Anordnung wird die Radianzverteilung des Himmels lediglich zur Umrechnung zwischen GHI, GTI in verschiedenen Ebenen und den jeweiligen Komponenten der globalen Strahlung, direkte Strahlung, diffuse Strahlung, am Boden reflektierte Strahlung, verwendet. So ist zunächst sichergestellt, dass sich die Genauigkeit der GTI-Messung für kleine Neigungswinkel der betrachteten Ebene der Messgenauigkeit des Pyranometers annähert.

Wolkenkameras eignen sich aufgrund des begrenzten Dynamikumfangs schlecht, um die Radianzverteilung zugleich im Bereich der Sonnenscheibe und im übrigen Himmelsdom zu bestimmen.

Der kombinierte Aufbau ermöglicht es dagegen vorteilhaft, den Bereich der Sonnenscheibe aus der Auswertung auszuschließen. Die in der Auswertung verwendete DNI kann aus der Messung der globalen Bestrahlungsstärke und der aus der Radianzverteilung (ausschließlich Sonnenscheibe) bestimmten diffusen Strahlung berechnet werden.

Der Messaufbau dient zur Erreichung einer hohen Genauigkeit der Strahlungsmessung. Bei geringeren Anforderungen an die Genauigkeit können Veränderungen im Aufbau und in der Auswertung vorgenommen werden.

Anstelle eines Thermopile-Pyranometers können optional andere Messgeräte genutzt werden, die einen Messwert der globalen Bestrahlungsstärke liefern können, z.B. Photodiode, Photovoltaik-Referenz-Zelle. Anstelle einer Mobotix-Q25-Überwachungskamera kann eine andere wetterfeste Fischaugen-Kamera mit einem Sichtfeld von 180°, vergleichbaren Aufnahmeeinstellungen sowie mit Beleuchtungsstärkemessung verwendet werden.

In der Auswertung kann optional die Berechnung von Korrekturfaktoren, wie Kamerasensitivität über Vergleich der Beleuchtungsstärke, Streueffekte in Abhängigkeit der direkten Normalstrahlung entfallen.

Nach einer günstigen Ausgestaltung der Vorrichtung können wenigstens ein Sensor der Strahlungssensoreinheit und wenigstens ein Sensor der Kamera in der horizontalen Ebene jeweils so angeordnet sein, dass das Sichtfeld der beiden Sensoren jeweils oberhalb der horizontalen Ebene liegt und mit der horizontalen Ebene abschließt.

Damit lässt sich die solare Strahlung in dem Halbraum über der horizontalen Ebene auf geeignete Weise messen, um daraus dann die globale Bestrahlungsstärke sowie die diffuse Strahlung in der horizontalen und/oder geneigten Ebene sowie die direkte Strahlung zu bestimmen.

Nach einer günstigen Ausgestaltung der Vorrichtung kann ein Abstand zwischen der Strahlungssensoreinheit und der Kamera so eingestellt oder einstellbar sein, dass der Sensor der Strahlungssensoreinheit im Sichtfeld der Kamera 20 mit einer Elevation von höchstens 10°, bevorzugt von höchstens 5°, sichtbar ist. Dadurch ist der Teil des Himmels, der von dem Sensor der Strahlungssensoreinheit für die Kamera verdeckt wird, genügend begrenzt, um so mit ausreichender Genauigkeit die globale Bestrahlungsstärke in einer geneigten Ebene zu bestimmen.

Nach einer günstigen Ausgestaltung der Vorrichtung können die Strahlungssensoreinheit und die Kamera gekoppelt sein, so dass eine Messdatenaufnahme von Strahlungssensoreinheit und Kamera zeitlich synchronisiert erfolgt. Damit lassen sich die Messdaten bei der Auswertung für die Bestimmung der globalen Bestrahlungsstärke sowie der diffusen Strahlung in der horizontalen und/oder geneigten Ebene sowie der direkten Strahlung geeignet korrelieren.

Nach einer günstigen Ausgestaltung der Vorrichtung kann die Kamera dazu ausgebildet sein, dass wenigstens folgende Eigenschaften vorliegen:
eine Aufnahme eines Einzelbildes kann in einem festen Zeitraster erfolgen, insbesondere zu jeder halben und vollen Minute; der wenigstens eine Sensor der Kamera kann eine konstante Farbtemperatur aufweisen; die Kamera kann eine konstante Belichtungsdauer für jedes Einzelbild aufweisen.

Für eine Belichtungssteuerung der Kamera kann ein vorgegebener Mindestwert einer mittleren Bildhelligkeit eingestellt werden, wobei die Belichtungsdauer bei einer höheren Bildhelligkeit unverändert bleibt.

Insbesondere kann der vorgegebene Mindestwert einer mittleren Bildhelligkeit bevorzugt höchstens 10%, besonders bevorzugt höchstens 8%, ganz besonders bevorzugt mindestens 5% betragen. Damit lässt sich eine hohe Genauigkeit bei der Bestimmung der globalen Bestrahlungsstärke sowie der diffusen Strahlung in der horizontalen und/oder geneigten Ebene sowie der direkten Strahlung erreichen.

Nach einer günstigen Ausgestaltung der Vorrichtung kann die Kamera zur Aufnahme des Himmels in dem Sichtfeld ausgebildet sein. Das Bild des Himmels kann in Echtzeit die Radianzverteilung des Himmels unter Ausschluss der Sonnenscheibe liefern. Durch eine angepasste Gewichtung und Integration der Radianzverteilung können so die diffuse Bestrahlungsstärke (DHI) in der horizontalen Ebene und der vom Himmel stammende Teil der diffusen Bestrahlungsstärke (DifTI) in beliebigen weiteren Ebenen bestimmt werden.

Nach einer günstigen Ausgestaltung der Vorrichtung kann die Strahlungssensoreinheit wenigstens eines von Pyranometer, insbesondere Thermopile-Pyranometer, Photodiode, Photovoltaik-Referenz-Zelle aufweisen.

Je nach Anforderung an die erforderliche Genauigkeit bei der Bestimmung der globalen Bestrahlungsstärke in einer geneigten Ebene kann so ein Kompromiss zwischen Aufwand an die Messtechnik und Kosten gefunden werden.

Nach einer günstigen Ausgestaltung der Vorrichtung kann die Strahlungssensoreinheit dazu ausgebildet sein, dass eine Messdatenaufnahme der Strahlungssensoreinheit zeitlich hochaufgelöst, insbesondere mit einer zeitlichen Auflösung von kleiner 10 sec, bevorzugt kleiner 5 sec, besonders bevorzugt kleiner oder gleich 1 sec, erfolgt. Damit ergibt sich eine ausreichende zeitliche Auflösung bei der Bestimmung der solaren Strahlung unter veränderlichen Strahlungsbedingungen.

Nach einer günstigen Ausgestaltung der Vorrichtung kann die Strahlungssensoreinheit zur Erfassung solarer Strahlung in einem Wellenlängenbereich von 0,3 µm bis 3 µm ausgebildet sein. Dieser Wellenlängenbereich ist zur Auslegung von Photovoltaik-Anlagen von besonderem Interesse und reicht von der unteren Grenze sichtbaren Lichts bis in den kurzwelligen Teil des Infrarot-Bereichs.

Nach einer günstigen Ausgestaltung der Vorrichtung kann die Kamera zur Erfassung des gesamten Sichtfelds in einer Aufnahme ausgebildet sein. Insbesondere kann die Kamera als Überwachungskamera und/oder als Fischaugen-Kamera ausgebildet sein. Mit einer solchen Kamera kann auf einfache Weise ohne mechanisch bewegte Teile der gesamte Halbraum über einer Ebene aufgenommen werden. Auch sind solche Kameras mit unterschiedlicher Auflösung teilweise günstig kommerziell erhältlich.

### Zeichnung

Weitere Vorteile ergeben sich aus der folgenden Zeichnungsbeschreibung. In den Figuren sind Ausführungsbeispiele der Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen beispielhaft:

- Fig. 1: einen schematischen Aufbau einer Vorrichtung zur Bestimmung einer globalen Bestrahlungsstärke solarer Strahlung und ihrer Komponenten direkte Strahlung, diffuse Strahlung, am Boden reflektierte Strahlung in einer horizontalen und/oder geneigten Ebene nach einem Ausführungsbeispiel der Erfindung in einer Seitenansicht;
- Fig. 2: den Aufbau der Vorrichtung nach Figur 1 in einer alternativen Aufstellung, bei der die Ebenen der Strahlungssensoreinheit und der Kamera gegen die horizontale Ebene geneigt sind;
- Fig. 3: den Aufbau der Vorrichtung nach Figur 1 in einer Draufsicht;
- Fig. 4: ein Ablaufdiagramm des Verfahrens zur Bestimmung einer Bestrahlungsstärke solarer Strahlung und ihrer Komponenten direkte Strahlung, diffuse Strahlung, am Boden reflektierte Strahlung in einer horizontalen und/oder geneigten Ebene nach einem Ausführungsbeispiel der Erfindung;
- Fig. 5: ein Ablaufdiagramm zur Bestimmung der vom Himmel stammenden diffusen Bestrahlungsstärke in einer Ebene;
- Fig. 6: ein Ablaufdiagramm zur Berechnung des Korrekturfaktors der Kamerasensitivität basierend auf einem Vergleich der von der Kamera ausgegebenen und berechneten Beleuchtungsstärke; und
- Fig. 7: eine Aufnahme des Himmels mit einer Vorrichtung nach einem Ausführungsbeispiel der Erfindung.

### Ausführungsformen der Erfindung

In den Figuren sind gleichartige oder gleichwirkende Komponenten mit gleichen Bezugszeichen beziffert. Die Figuren zeigen lediglich Beispiele und sind nicht beschränkend zu verstehen.

Im Folgenden verwendete Richtungsterminologie mit Begriffen wie "links", "rechts", "oben", "unten", "davor" "dahinter", "danach" und dergleichen dient lediglich dem besseren Verständnis der Figuren und soll in keinem Fall eine Beschränkung der Allgemeinheit darstellen. Die dargestellten Komponenten und Elemente, deren Auslegung und Verwendung können im Sinne der Überlegungen eines Fachmanns variieren und an die jeweiligen Anwendungen angepasst werden.

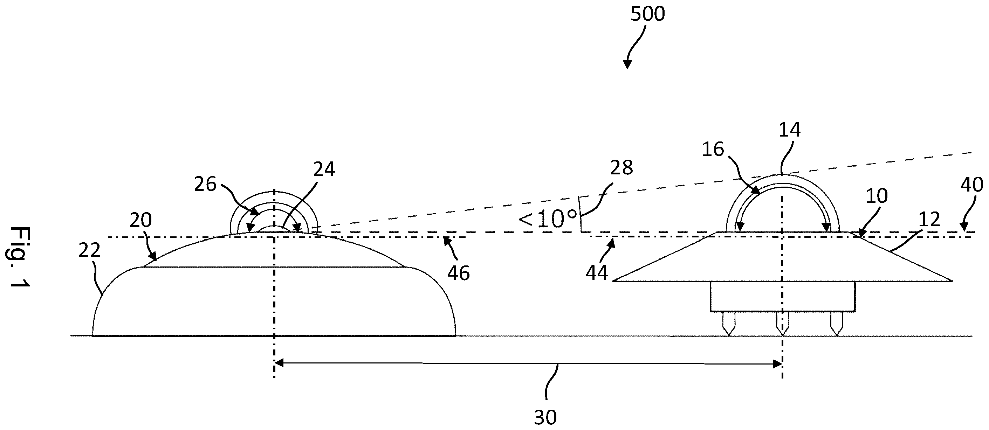

Figur 1 zeigt einen schematischen Aufbau der Vorrichtung 500 zur Bestimmung einer globalen Bestrahlungsstärke solarer Strahlung und ihrer Komponenten direkte Strahlung, diffuse Strahlung und am Boden reflektierte Strahlung in einer horizontalen Ebene 40 und/oder in einer zu einer horizontalen Ebene 40 geneigten Ebene nach einem Ausführungsbeispiel der Erfindung in einer Seitenansicht.

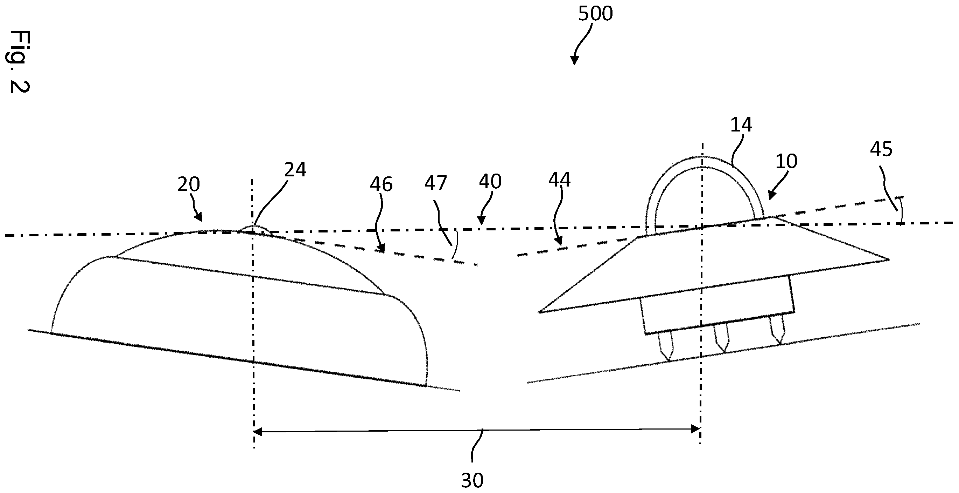

In Figur 2 ist der Aufbau der Vorrichtung 500 nach Figur 1 in einer alternativen Aufstellung dargestellt, bei der Ebenen 44, 46 der Strahlungssensoreinheit 10 und der Kamera 20 gegen die horizontale Ebene 40 geneigt sind.

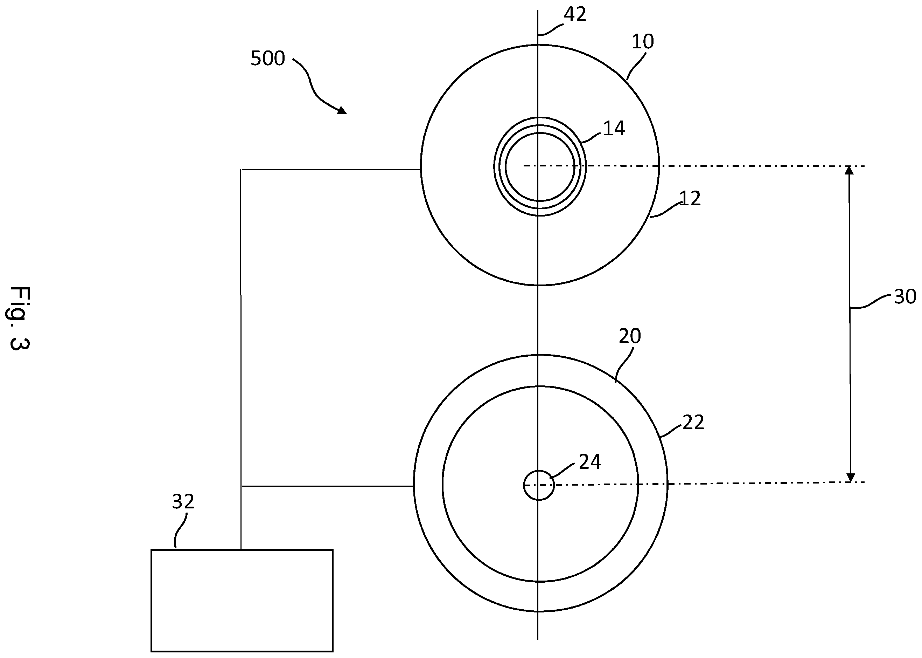

In Figur 3 ist der Aufbau der Vorrichtung 500 in einer Draufsicht dargestellt.

Die Vorrichtung 500 umfasst eine Strahlungssensoreinheit 10, eine Kamera 20, sowie eine Auswerteeinheit 32 (in Figur 3 dargestellt), welche zur Auswertung von Messdaten der Strahlungssensoreinheit 10 und/oder der Kamera 20 vorgesehen ist. Die Strahlungssensoreinheit 10 ist zur Bestimmung der Bestrahlungsstärke solarer Strahlung in einem Sichtfeld 16 von 180°, also dem Halbraum über der Ebene 44 vorgesehen, und die Kamera 20 ist ebenfalls zur Erfassung eines Sichtfelds 26 von 180°, also dem Halbraum über einer Ebene 46 vorgesehen.

Bei der in Figur 1 dargestellten Aufstellung der Vorrichtung 500 sind die beiden Ebenen 44, 46 in der horizontalen Ebene 40 ausgerichtet und stimmen mit der horizontalen Ebene 40 überein.

Bei der in Figur 2 dargestellten Aufstellung der Vorrichtung 500 sind die Ebenen 44, 46 der Strahlungssensoreinheit 10 und der Kamera 20 jeweils mit einem Winkel 45, 47 gegen die horizontale Ebene 40 geneigt. Der Winkel 45, 47 kann dabei zwischen 0° und 90° eingestellt werden.

Die Strahlungssensoreinheit 10 und die Kamera 20 sind in diesem Ausführungsbeispiel beispielsweise auf einer Nord-Süd-Achse 42 angeordnet, wobei die Strahlungssensoreinheit 10 auf der nördlichen Erd-Hemisphäre nördlich der Kamera 20, wie in Figur 3 dargestellt, angeordnet ist. Auf der südlichen Erd-Hemisphäre wäre die Strahlungssensoreinheit 10 südlich der Kamera 20 angeordnet.

Die Strahlungssensoreinheit 10, welche beispielsweise als ein Pyranometer, insbesondere ein Thermopile-Pyranometer, ausgebildet sein kann, umfasst ein Gehäuse 12, über welchem der Sensor 14 angeordnet ist, um den oberen Halbraum mit dem Sichtfeld 16 von 180° zu erfassen.

Die Strahlungssensoreinheit 10 ist zur Erfassung solarer Strahlung in einem Wellenlängenbereich von 0,3 µm bis 3 µm ausgebildet.

Die Strahlungssensoreinheit 10 kann alternativ auch als Photodiode, oder Photovoltaik-Referenz-Zelle ausgebildet sein, wenn geringere Anforderungen an die Genauigkeit der Bestimmung der globalen Bestrahlungsstärke gestellt werden.

Die Kamera 20, welche beispielsweise als Fischaugen-Überwachungskamera, insbesondere beispielsweise als Mobotix Q25-Überwachungskamera oder als Wolkenkamera, ausgebildet sein kann, umfasst ein Gehäuse 22, über welchem der Sensor 24 angeordnet ist, um den oberen Halbraum mit dem Sichtfeld 16 von 180° zu erfassen. Die Kamera 20 ist bevorzugt zur Aufnahme des Himmels in dem Sichtfeld 26 ausgebildet.

Die Kamera 20 ist vorteilhaft so ausgebildet, dass sie das gesamte Sichtfeld 26 in einer einzigen Aufnahme erfassen kann, ohne dass mechanisch bewegte Teile benötigt werden.

Beide Instrumente sind vorteilhaft in unmittelbarer Nähe zueinander horizontal nivelliert auf gleicher Höhe angeordnet. Zusätzlich ist der Aufstellungsort zweckmäßig so gewählt, dass weitere Hindernisse in den Sichtfeldern von Strahlungssensoreinheit und Kamera vermieden werden.

Der Sensor 14 der Strahlungssensoreinheit 10 und der Sensor 24 der Kamera 20 sind in der hier dargestellten vorteilhaften Ausführungsform in der horizontalen Ebene 40 jeweils so angeordnet, dass das Sichtfeld 16, 26 der beiden Sensoren 14, 24 jeweils oberhalb der horizontalen Ebene 40 liegt und mit der horizontalen Ebene 40 abschließt.

Der Abstand 30 zwischen der Strahlungssensoreinheit 10 und der Kamera 20 ist so eingestellt, dass der Sensor 14 der Strahlungssensoreinheit 10 im Sichtfeld 26 der Kamera 20 mit einer Elevation 28 von höchstens 10°, sichtbar ist.

Die Strahlungssensoreinheit 10 und die Kamera 20 sind so gekoppelt, dass eine Messdatenaufnahme von Strahlungssensoreinheit 10 und Kamera 20 zeitlich synchronisiert erfolgt. Eine Auswertung der Messdaten erfolgt zweckmäßig in der Auswerteeinheit 32.

Die Messdatenaufnahme der Strahlungssensoreinheit 10 erfolgt zeitlich hochaufgelöst, insbesondere mit einer zeitlichen Auflösung von kleiner 10 sec, bevorzugt kleiner 5 sec, besonders bevorzugt kleiner oder gleich 1 sec.

Die Kamera 20 kann zweckmäßig so konfiguriert sein, dass eine Aufnahme eines Einzelbildes in einem festen Zeitraster, insbesondere zu jeder halben und vollen Minute erfolgt. Vorteilhaft kann der wenigstens eine Sensor 24 der Kamera 20 eine konstante Farbtemperatur aufweisen. Die Kamera 20 kann günstigerweise eine konstante Belichtungsdauer für jedes Einzelbild aufweisen. Für die Belichtungssteuerung der Kamera 20 kann ein vorgegebener Mindestwert einer mittleren Bildhelligkeit eingestellt werden, wobei die Belichtungsdauer bei einer höheren Bildhelligkeit unverändert bleibt.

Insbesondere kann dabei der vorgegebene Mindestwert einer mittleren Bildhelligkeit bevorzugt höchstens 10%, besonders bevorzugt höchstens 8%, ganz besonders bevorzugt mindestens 5% betragen.

Das Bild der Kamera 20 liefert in Echtzeit die Radianzverteilung des Himmels unter Ausschluss der Sonnenscheibe. Durch eine angepasste Gewichtung und Integration der Radianzverteilung können die diffuse Bestrahlungsstärke (DHI) in der horizontalen Ebene 40 und der vom Himmel stammende Teil der diffusen Bestrahlungsstärke (DifTl) in beliebigen weiteren Ebenen bestimmt werden. Aus der von der als Pyranometer ausgebildeten Strahlungssensoreinheit 10 gemessenen globalen Bestrahlungsstärke in der Ebene 44 des Pyranometers und der über das Kamerabild berechneten diffusen Strahlung in dieser Ebene 44 kann die DNI unter Verwendung des bekannten Sonnenstandes berechnet werden. Daraus lässt sich die GTI bestimmen: Der direkte Anteil der Bestrahlungsstärke DNI wird rein geometrisch in die gefragte Ebene projiziert. Der diffuse Anteil aus dem Himmel DifTI wird über die oben beschriebene gewichtete Integration gewonnen. Der vom Boden reflektierte Anteil der Bestrahlungsstärke in die geneigte Ebene wird unter Schätzung der Albedo des Bodens und der über das Pyranometer und die Kamera bestimmten Globalstrahlung GHI in der horizontalen Ebene bestimmt.

Mittels der beschriebenen Vorrichtung kann die Radianzverteilung des Himmels direkt über das Kamerabild bestimmt werden.

Mittels der in den Figuren 1 bis 3 beschriebenen Vorrichtung aus Kamera 20 und Strahlungssensoreinheit 10, insbesondere in Form eines Pyranometers, kann die Globalstrahlung in der Ebene 44 der Strahlungssensoreinheit 10 direkt über die beispielsweise als Pyranometer ausgebildeten Strahlungssensoreinheit 10 bestimmt werden. Das Kamerabild wird genutzt, um die diffuse Bestrahlungsstärke in beliebigen Ebenen statt allein in der Horizontalen zu bestimmen.

Zusätzlich wird die direkte Strahlung über den Abgleich der Globalstrahlung der beispielsweise als Pyranometer ausgebildeten Strahlungssensoreinheit 10 mit der diffusen Strahlung aus dem Kamerabild, ausgewertet für die Ebene 44 des Pyranometers, bestimmt. Die mittels der beispielsweise als Pyranometer ausgebildeten Strahlungssensoreinheit 10 gemessene Globalstrahlung kann somit im vorliegenden Fall mit hoher Genauigkeit in die Bestrahlungsstärke in einer beliebigen Ebene umgerechnet werden. Die Berechnung der GTI und hierfür der diffusen Strahlung in geneigten Ebenen erfolgt über eine angepasste Integration der Radianzverteilung.

Die in den Figuren 1 bis 3 beschriebene Vorrichtung nutzt ein handelsübliches Pyranometer sowie eine preisgünstige Fischaugen-Überwachungskamera. Um eine solche Kamera für Messungen der Radianzverteilung des Himmels nutzen zu können, kann die Belichtungssteuerung der Kamera gezielt angepasst werden. Mittels eines geeigneten Parametersatzes der Kamerasteuerung kann gewährleistet werden, dass für die Messung relevante Bildeigenschaften unabhängig von der beobachteten Szenerie weitgehend konstant bleiben. Statt einer zusätzlichen individuellen radiometrischen Kalibration jeder Kamera 20 gleicht das vorliegende Messsystem im laufenden Betrieb einen von der Kamera 20 ausgegebenen Diagnose-Wert der Beleuchtungsstärke mit einem über das Kamerabild berechneten Wert ab. Hierdurch wird die Sensitivität der Kamera in Echtzeit korrigiert. Bei der Berechnung wird eine Korrektur für die Kamerabildverstärkung angewandt.

Die in den Figuren 1 bis 3 beschriebene Vorrichtung nutzt einen kombinierten Messaufbau von Strahlungssensoreinheit 10 und Kamera 20 am gleichen Standort. Durch diese Anordnung wird die Radianzverteilung des Himmels zur Umrechnung zwischen Globalstrahlungsmessung des Pyranometers 10 und GHI, GTI als auch zwischen diesen Größen und deren jeweiligen Komponenten, direkte Strahlung, diffuse Strahlung, am Boden reflektierte Strahlung, verwendet.

So ist zunächst sichergestellt, dass sich die Genauigkeit der GTI-Messung für kleine Neigungswinkel der betrachteten Ebene der Messgenauigkeit des Pyranometers annähert. Der kombinierte Aufbau ermöglicht es, den Bereich der Sonnenscheibe aus der Auswertung auszuschließen. Die in der Auswertung verwendete DNI kann aus der Messung der Globalstrahlung und der aus der Radianzverteilung (ausschließlich Sonnenscheibe) bestimmten diffusen Strahlung berechnet werden.

Die in den Figuren 1 bis 3 beschriebene Vorrichtung dient zur Erreichung einer hohen Genauigkeit der Strahlungsmessung. Bei geringeren Anforderungen an die Genauigkeit können Veränderungen im Aufbau und in der Auswertung vorgenommen werden.

Anstelle eines Thermopile-Pyranometers können optional andere Messgeräte genutzt werden, die einen Messwert der GHI liefern können, z.B. Photodiode, Photovoltaik-Referenz-Zelle. Anstelle einer Mobotix-Q25-Überwachungskamera kann eine andere wetterfeste Fischaugen-Kamera mit einem Sichtfeld von 180°, vergleichbaren Aufnahmeeinstellungen sowie mit Beleuchtungsstärkemessung verwendet werden.

In der Auswertung kann dann optional die Berechnung von Korrekturfaktoren, wie Kamerasensitivität über Vergleich der Beleuchtungsstärke, Streueffekte in Abhängigkeit der direkten Normalstrahlung entfallen.

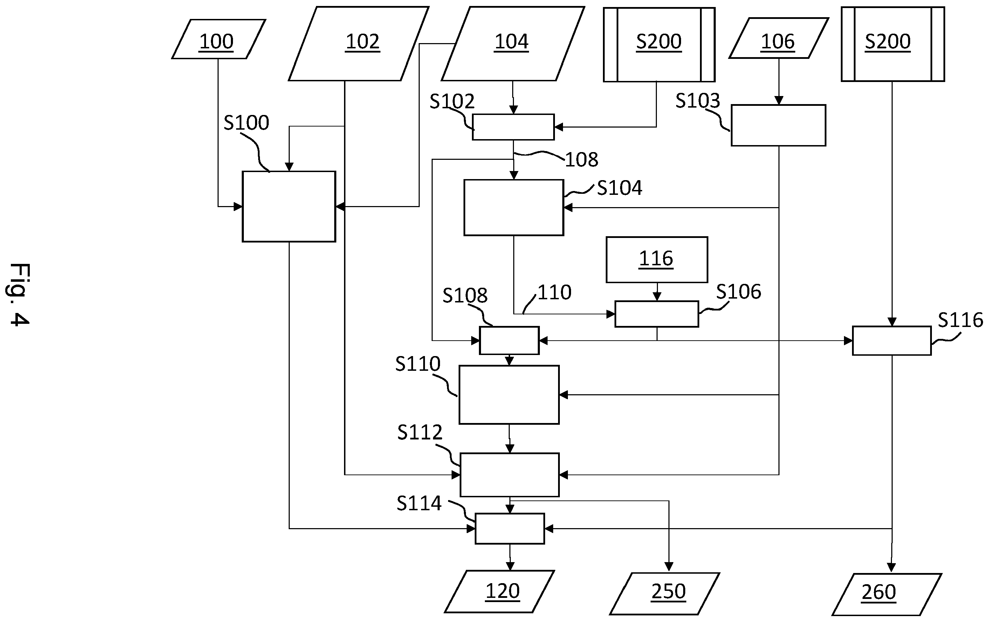

Figur 4 zeigt ein Ablaufdiagramm des Verfahrens zur Bestimmung einer Bestrahlungsstärke solarer Strahlung in einer zu einer horizontalen Ebene 40 geneigten Ebene nach einem Ausführungsbeispiel der Erfindung. Dabei wird eine Vorrichtung mit einer Strahlungssensoreinheit 10, einer Kamera 20 und einer Auswerteeinheit 32 eingesetzt, wie in den Figuren 1 bis 3 dargestellt. Mittels des Verfahrens wird eine globale Bestrahlungsstärke der Sonnenstrahlung in einer zu der horizontalen Ebene 40 geneigten Ebene bestimmt. Des Weiteren liefert das Verfahren die DNI und die diffuse Strahlung in beliebigen Ebenen. Das Verfahren kann auch genutzt werden, um eine dieser Größen zu berechnen.

Als Strahlungssensoreinheit 10 kann vorteilhaft, wie vorstehend beschrieben, ein Pyranometer, insbesondere ein Thermopile-Pyranometer und als Kamera 20 eine Wolkenkamera wie beispielsweise eine Mobotix-Q25-Überwachungskamera eingesetzt werden. Beide Instrumente sind vorteilhaft in unmittelbarer Nähe zueinander horizontal nivelliert auf gleicher Höhe angeordnet.

Die Rot-Grün-Blau (RGB)-Farbkanäle des Bildes des Himmels werden gewichtet summiert. Die Gewichtung der Kanäle bewirkt dabei eine möglichst gleichmäßige Sensitivität der Kamera 20 im sichtbaren Wellenlängenbereich. Dieser Grauwert wird mit einer Breitbandkorrektur multipliziert, um Strahlung bei Wellenlängen außerhalb des Messbereichs der Kamera 20 zu berücksichtigen.

Unter Verwendung einer für Wolkenkameras standardmäßigen geometrischen internen und externen Kalibrierung wird für jedes Pixel des Kamerabilds ein Himmelsbereich angegeben (Azimuth und Zenithwinkel). So ergibt sich eine Schätzung der Radianzverteilung des Himmels.

Analog zur Radianzverteilung wird eine Leuchtdichte-Verteilung berechnet. Hierzu werden die RGB-Farbkanäle vor der Summation entsprechend der Sensitivität des menschlichen Auges gewichtet. Integration der Leuchtdichte-Verteilung über alle Winkelbereiche liefert einen Messwert der Beleuchtungsstärke. Die von der Kamera 20 ausgegebene und über das Kamerabild berechnete Beleuchtungsstärke werden verglichen. Die Radianzverteilung wird entsprechend dem Verhältnis beider Werte skaliert, um einen Einfluss der Kamerasteuerung auf die Sensitivität der Kamera 20 auszugleichen.

Der Bereich der Sonnenscheibe wird maskiert. Für eine ausgewertete Sensorebene wird jeder Himmelsbereich im Radianzbild entsprechend einer Projektion in die Ebene gewichtet. Integration der Radianzverteilung über alle Himmelsbereiche, welche im Sichtfeld der geneigten Ebene liegen, liefert die aus dem Himmel stammende diffuse Bestrahlungsstärke der jeweiligen Ebene.

Die horizontale diffuse Bestrahlungsstärke in der Ebene 44 der Strahlungssensoreinheit 10 wird entsprechend berechnet. Aus dem Vergleich zur mittels Pyranometer gemessenen horizontalen globalen Bestrahlungsstärke und unter Kenntnis des aktuellen Sonnenstands wird die direkte Normalstrahlung (DNI) berechnet.

Zur Korrektur von Brechungseffekten in der Linse der Kamera 20 werden der erste Schätzwert der diffusen Strahlung in der Ebene 44 der Strahlungssensoreinheit 10 sowie alle übrigen berechneten diffusen Bestrahlungsstärken um einen Anteil der DNI reduziert (Linsenbrechungskorrektur). Entsprechend wird die Korrektur zur direkten Strahlung in der Ebene 44 der Strahlungssensoreinheit 10 hinzuaddiert. Anschließend wird die DNI neu berechnet.

Die GTI in einer ausgewerteten Ebene ergibt sich schließlich aus einem direkten Anteil, einem diffusen Anteil vom Himmel und einem am Boden reflektierten Anteil. Die DNI wird in die ausgewertete Ebene projiziert und ergibt somit den direkten Anteil. Die diffuse Bestrahlungsstärke wird wie oben beschrieben aus dem Kamerabild für diese Ebene berechnet. Der reflektierte Anteil ergibt sich als GHI multipliziert mit der Albedo des Untergrunds und dem Term $\left(1-cos\left(Neigungswinkel der geneigten Ebene gegen die Horizontale\right)\right) / 2 .$

Gemäß dem angegebenen Verfahren kann zur Umrechnung der mit der Strahlungssensoreinheit 10 bestimmten globalen Bestrahlungsstärke der Sonnenstrahlung in der Ebene 44 der Strahlungssensoreinheit 10 in die Bestrahlungsstärke 120 und/oder deren jeweilige Komponenten, direkte Strahlung 250, diffuse Strahlung 260, am Boden reflektierte Strahlung, in der horizontalen Ebene 40 und/oder in der zu der horizontalen Ebene 40 geneigten Ebene, wenigstens eine der Größen von am Boden reflektierter Strahlung, und/oder diffuser Strahlung 220, und/oder des Sonnenstands bei der Strahlungsmessung, und/oder eines sensorspezifischen Korrekturfaktors, welcher insbesondere Linsenparameter der Kamera 20 umfasst, herangezogen werden. Hierbei können die Strahlungsmessung beeinflussende Faktoren des Sonnenstands bei der Umrechnung berücksichtigt werden.

Weiter kann gemäß dem angegebenen Verfahren zur Umrechnung von Messwerten der Kamera 20 wenigstens eine der Größen von einem Verhältnis 210 einer breitbandigen Strahlung zu von der Kamera 20 registriertem Anteil der Strahlung, und/oder einer spektralen Intensität 202 von RGB-Kanälen der Kamera 20, und/oder einer internen und/oder externen Kalibration 208 der Kamera 20, und/oder einer Neigung und Ausrichtung 102 des Sensors 24 der Kamera 20, und/oder des Sonnenstands bei der Strahlungsmessung und/oder einer Kamerasensitivität, welche aus einer Beleuchtungsstärke 300 der Kamera 20 und/oder der spektralen Sensitivität 202 der RGB-Kanäle und/oder Aufnahmeeinstellungen 204 und/oder dem RGB-Kamerabild 206 und/oder der internen und/oder externen Kalibration 208 der Kamera 20 bestimmt wird, herangezogen werden. Hierbei können die Strahlungsmessung beeinflussende Faktoren des Sonnenstands bei der Umrechnung berücksichtigt werden.

In Figur 4 sind die einzelnen Schritte zur Bestimmung der globalen Bestrahlungsstärke 120 der Sonnenstrahlung und/oder deren jeweilige Komponenten, direkte Strahlung 250, diffuse Strahlung 260, am Boden reflektierte Strahlung, in der horizontalen Ebene 40 sowie in der zur horizontalen Ebene 40 geneigten Ebene beschrieben.

Im Schritt S100 wird die am Boden reflektierte Strahlung mittels Albedo 100, Neigung und Ausrichtung 102 der geneigten Ebene, sowie eines Messwerts 104 der globalen Bestrahlungsstärke in der Ebene 44 der Strahlungssensoreinheit 10 bestimmt.

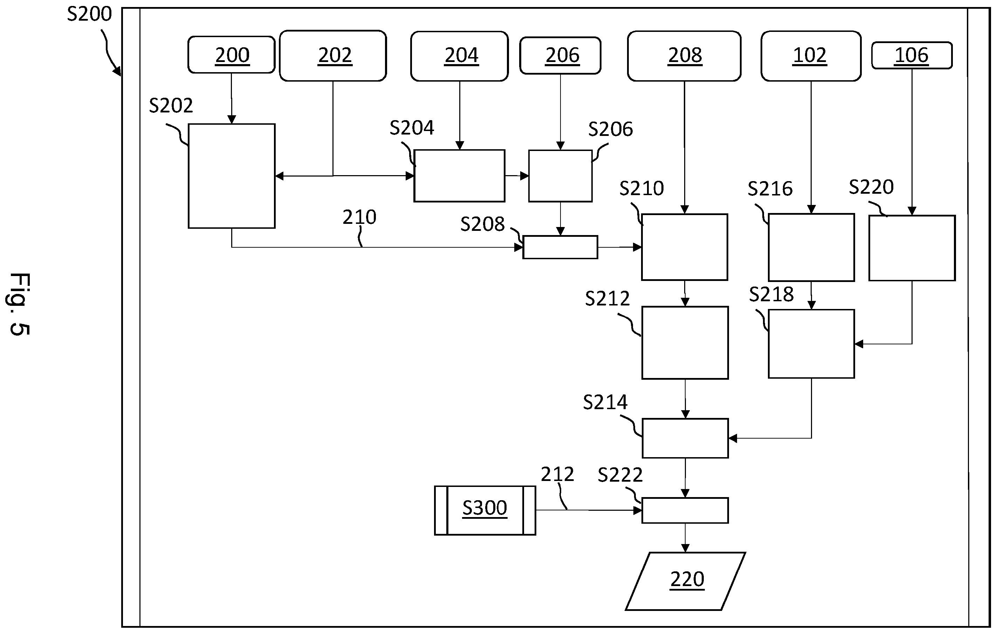

Im Schritt S102 wird die direkte Strahlung 108 in der Ebene 44 der Strahlungssensoreinheit 10 bestimmt durch Subtraktion S102 des Messwerts der diffusen Strahlung 220, ausgewertet für die Ebene 44 der Strahlungssensoreinheit 10 von der globalen Bestrahlungsstärke in der Ebene 44 der Strahlungssensoreinheit 10. Die diffuse Strahlung 220 in der Ebene 44 der Strahlungssensoreinheit 10 wird zuvor im Modul S200, beschrieben in Figur 5, bestimmt.

Darauf wird die direkte Normalstrahlung 110 bestimmt durch Umkehren der Projektion im Schritt S104 in die Ebene 44 der Strahlungssensoreinheit 10 mittels dem Standort und Uhrzeit 106 im Schritt S103 berechnetem Sonnenstand.

Im Schritt S106 wird die direkte Normalstrahlung 110 multipliziert mit einem Korrekturfaktor, welcher insbesondere Linsenparameter der Kamera 20 umfasst. Es ergibt sich eine Linsenbrechungskorrektur.

Im Schritt S108 werden die direkte Strahlung 108 in der Ebene 44 der Strahlungssensoreinheit 10 und die Linsenbrechungskorrektur addiert sowie in Schritt S110 die Projektion in die Ebene 44 der Strahlungssensoreinheit 10 unter Einbezug des im Schritt S103 berechneten Sonnenstandes umgekehrt. Danach wird im Schritt S112 diese direkte Normalstrahlung 108 unter Einbezug von Neigung und Ausrichtung 102 der horizontalen und/oder geneigten Ebene in diese projiziert, um den korrigierten Messwert der direkten Strahlung 250 in dieser Ebene zu erhalten.

Im Schritt S116 wird die Linsenbrechungskorrektur von der diffusen Strahlung 220, ausgewertet für die geneigte oder horizontale Ebene, welche im Modul S200, wie in Figur 5 beschrieben, bestimmt wird, subtrahiert. Damit wird ein korrigierter Messwert der diffusen Strahlung 260 in der betreffenden geneigten oder horizontalen Ebene ermittelt.

Danach kann dann in Schritt S114 die globale Bestrahlungsstärke 120 in der horizontalen und/oder geneigten Ebene bestimmt werden durch Summieren der am Boden reflektierten Strahlung aus dem Schritt S100, der direkten Strahlung 250 als einer Komponente der globalen Bestrahlungsstärke 120 in der horizontalen und/oder geneigten Ebene aus dem Schritt S112, sowie der diffusen Strahlung 260 als einer Komponente der globalen Bestrahlungsstärke 120, ausgewertet für die horizontale und/oder geneigte Ebene, korrigiert im Schritt S116.

In Figur 5 ist ein Ablaufdiagramm zur Bestimmung der vom Himmel stammenden diffusen Bestrahlungsstärke 220 in der horizontalen oder geneigten Ebene, insbesondere in der Ebene 44 der Strahlungssensoreinheit 10 mittels des Moduls S200 dargestellt.

Im Schritt S202 wird zunächst ein Breitband-Korrekturfaktor 210 aus dem Verhältnis breitbandiger Strahlung zu von der Kamera 20 registriertem Anteil mittels des Tageslichtspektrums 200 und der spektralen Sensitivität 202 von RGB-Kanälen der Kamera 20 bestimmt.

Im Schritt S204 werden dazu Gewichte der RGB-Kanäle entsprechend der inversen Sensitivität mittels der Aufnahmeeinstellungen 204 der Kamera 20 bestimmt.

Damit können im Schritt S206 die gewichteten RGB-Kanäle des Kamerabilds 206 aufsummiert werden.

Im Schritt S208 werden die summierten RGB-Kanäle mit dem Breitband-Korrekturfaktor 210 multipliziert.

Damit können im Schritt S210 Winkelbereiche des Himmels Bildpixeln der Kamera 20 mittels interner und/oder externer Kalibrationswerte 208 der Kamera 20 zugeordnet werden.

Danach werden diese Bildbereiche im Schritt S212 entsprechend der Projektion in die horizontale und/oder geneigte Ebene gewichtet.

Parallel wird im Schritt S216 der Winkelbereich des Sichtfeldes der horizontalen und/oder geneigten Ebene aus Neigung und Ausrichtung 102 dieser Ebene bestimmt, während im Schritt S220 der Winkelbereich der Sonnenscheibe aus Standort und Uhrzeit 106 bestimmt wird.

Damit kann dann im Schritt S218 der Winkelbereich der Sonnenscheibe aus dem Winkelbereich des Sichtfelds 26 der horizontalen und/oder geneigten Ebene ausgeschlossen werden.

Anschließend werden im Schritt S214 die Bildbereiche aus dem Schritt S212 über das Sichtfeld der horizontalen oder geneigten Ebene integriert.

Die diffuse Strahlung 220 in der horizontalen oder geneigten Ebene, insbesondere in der Ebene 44 der Strahlungssensoreinheit 10 kann dann im Schritt S222 durch Multiplikation mit dem Korrekturfaktor 212 der Kamerasensitivität berechnet werden, welcher zuvor mittels des Moduls S300 bestimmt wurde.

Bei dem dargestellten Ausführungsbeispiel in Figur 5 wird die diffuse Strahlung 220 in der horizontalen oder geneigten Ebene, insbesondere in der Ebene 44 der Strahlungssensoreinheit 10 bestimmt. Mit Hilfe des Moduls S200 kann die diffuse Strahlung 220 in der beliebigen horizontalen und/oder geneigten Ebene bestimmt werden.

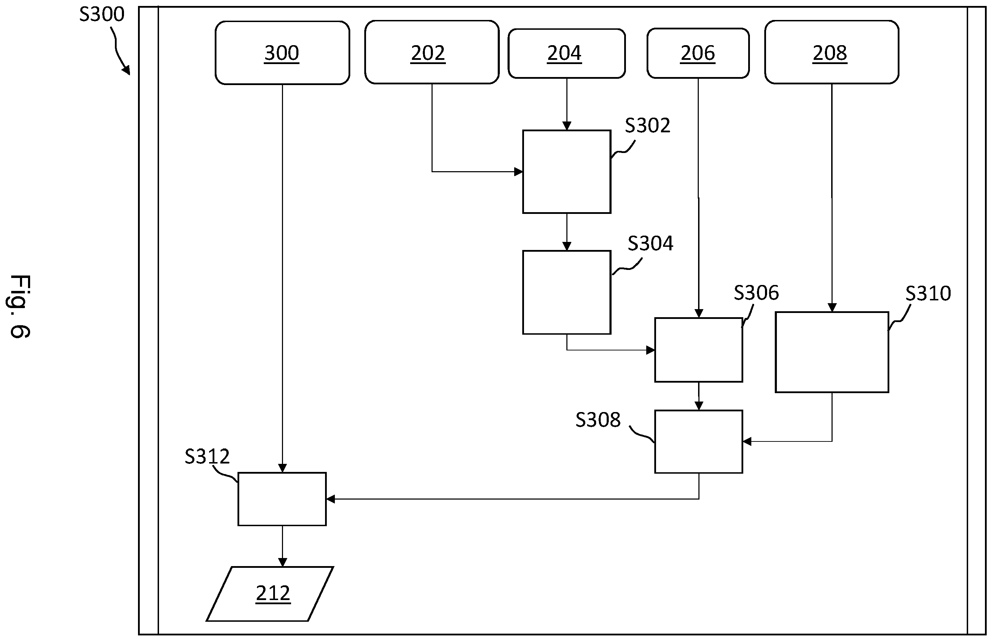

Figur 6 zeigt dazu ein Ablaufdiagramm zur Berechnung des Korrekturfaktors 212 der Kamerasensitivität basierend auf einem Vergleich der von der Kamera ausgegebenen und berechneten Beleuchtungsstärke mittels des Moduls S300.

Zunächst werden im Schritt S302 Gewichte entsprechend der Sensitivität jedes RGB-Kanals der Kamera 20 mittels der spektralen Sensitivität 202 der RGB-Kanäle und den Aufnahmeeinstellungen 204 der Kamera 20 bestimmt.

Anschließend werden daraus im Schritt S304 Gewichte entsprechend der menschlichen Wahrnehmung bestimmt.

Mittels dieser Gewichte können dann im Schritt S306 RGB-Kanäle aus dem RGB-Kamerabild 206 gewichtet aufsummiert werden.

Parallel dazu werden im Schritt S310 Winkelbereiche des Himmels Bildpixeln der Kamera 20 mittels der internen und/oder externen Kalibrationswerte 208 der Kamera 20 zugeordnet.

Danach werden im Schritt S308 die gewichteten RGB-Kanäle aus dem Schritt S306 über die Hemisphäre des Himmels integriert.

Damit kann im Schritt S312 der Korrekturfaktor 212 der Kamerasensitivität durch Berechnung des Verhältnisses aus der Beleuchtungsstärke 300 der Kamera 20 und dem integrierten gewichteten RGB-Kamerabild bestimmt werden.

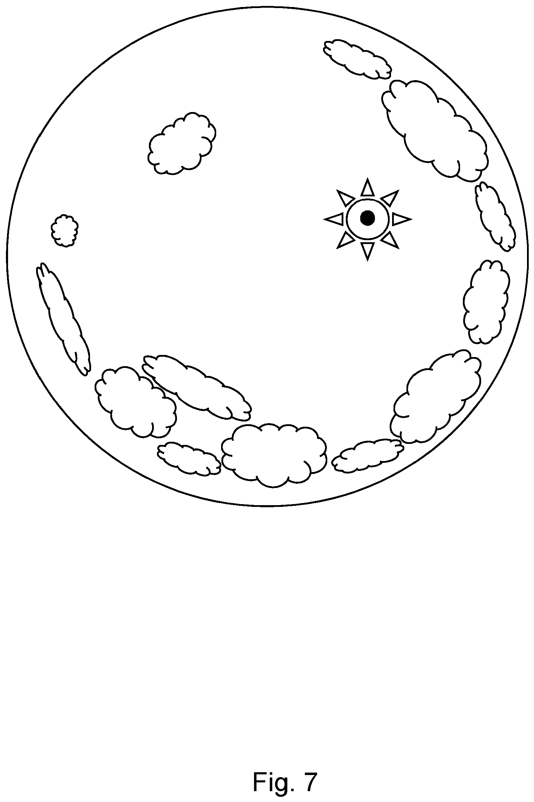

Figur 7 zeigt eine Aufnahme des Himmels mit Wolken, aufgenommen mit einer Kamera 20 einer Vorrichtung 500 nach einem Ausführungsbeispiel der Erfindung. Dargestellt ist eine typische Aufnahme einer Fischaugenoptik mit einem Sichtfeld von 180° im Halbraum über der Horizontalen. In der Nähe des Zeniths ist die leuchtende, nicht näher bezeichnete Sonnenscheibe zu erkennen, während am Rand des Bildes, also mehr im Horizontbereich, nicht näher bezeichnete Wolken zu erkennen sind.

### Bezugszeichen

- 10: Strahlungssensoreinheit
- 12: Gehäuse
- 14: Sensor
- 16: Sichtfeld
- 20: Kamera
- 22: Gehäuse
- 24: Sensor
- 26: Sichtfeld
- 28: Elevation
- 30: Abstand
- 32: Auswerteeinheit
- 40: horizontale Ebene
- 42: Nord-Süd-Achse
- 44: Ebene Strahlungssensoreinheit
- 45: Neigungswinkel
- 46: Ebene Kamera
- 47: Neigungswinkel
- 100: Albedo
- 102: Neigung, Ausrichtung des Sensors
- 104: Messwert globale Bestrahlungsstärke in horizontaler Ebene
- 106: Standort, Zeit
- 108: direkte Strahlung in horizontaler Ebene
- 110: direkte Normalstrahlung
- 120: globale Bestrahlungsstärke in geneigter Ebene
- 200: Tageslichtspektrum
- 202: spektrale Sensitivität der RGB-Kanäle
- 204: Kameraaufnahmeeinstellungen
- 206: RGB-Kamerabild
- 208: Kalibration der Kamera
- 210: Breitband-Korrekturfaktor
- 212: Korrekturfaktor Kamerasensitivität
- 220: diffuse Strahlung in Sensorebene
- 250: direkte Strahlung in beliebiger Ebene
- 260: diffuse Strahlung in beliebiger Ebene
- 300: Beleuchtungsstärke Kamera
- 500: Vorrichtung

## Patentansprüche

1. Verfahren zur Bestimmung einer globalen Bestrahlungsstärke (120) solarer Strahlung und/oder wenigstens einer ihrer Komponenten, in einer horizontalen Ebene (40) und/oder in einer zu der horizontalen Ebene (40) geneigten Ebene, wobei die Komponenten direkte Strahlung (250), diffuse Strahlung (220, 260), am Boden reflektierte Strahlung umfassen, mit einer Vorrichtung (500), umfassend wenigstens eine Strahlungssensoreinheit (10), eine Kamera (20), sowie eine Auswerteeinheit (32), welche zur Auswertung von Messdaten der Strahlungssensoreinheit (10) und/oder der Kamera (20) eingerichtet ist,
wobei die Strahlungssensoreinheit (10) in einer Ebene ( 44) angeordnet ist,
wobei die Strahlungssensoreinheit (10) die Bestrahlungsstärke solarer Strahlung in einem Sichtfeld (16) von 180° über der Ebene (44) bestimmt,
wobei die Kamera (20) in einer Ebene ( 46) angeordnet ist,
wobei die Kamera (20) ein Sichtfeld (26) von 180° über der Ebene (46) erfasst,
wobei die Strahlungssensoreinheit (10) und die Kamera (20) in einem kombinierten Messaufbau am gleichen Standort angeordnet sind, das Kamerabild ein Bild des Himmels ist, welches RGB-Kanäle aufweist;
wobei eine globale Bestrahlungsstärke der Sonnenstrahlung gemessen und in die globale Bestrahlungsstärke (120) und/oder in eine oder mehrerer ihrer Komponenten in der horizontalen Ebene (40) und/oder in der zu der horizontalen Ebene (40) geneigten Ebene umgerechnet wird,
wobei eine Bestimmung (S200) der diffusen Strahlung (220) in der horizontalen und/oder geneigten Ebene, insbesondere in der Ebene (44) der Strahlungssensoreinheit (10), erfolgt mit den Schritten:
(i) Bestimmen (S202) eines Breitband-Korrekturfaktors (210) aus dem Verhältnis breitbandiger Strahlung zu von der Kamera (20) registriertem Anteil mittels des Tageslichtspektrums (200) und der spektralen Sensitivität (202) von RGB-Kanälen der Kamera (20);
(ii) Bestimmen (S204) von Gewichten der RGB-Kanäle entsprechend der inversen Sensitivität mittels der Aufnahmeeinstellungen (204) der Kamera (20);
(iii) Summieren (S206) der gewichteten RGB-Kanäle des Kamerabilds (206);
(iv) Multiplizieren (S208) der summierten RGB-Kanäle mit dem Breitband-Korrekturfaktor (210);
(v) Zuordnen (S210) von Winkelbereichen des Himmels zu Bildpixeln der Kamera (20) mittels interner und/oder externer Kalibrationswerte (208) der Kamera (20);
(vi) Gewichten (S212) der Bildbereiche entsprechend der Projektion in die horizontale und/oder geneigte Ebene;
(vii) Bestimmen (S216) des Winkelbereichs des Sichtfeldes der horizontalen und/oder geneigten Ebene aus deren Neigung und Ausrichtung sowie aus der Neigung und Ausrichtung des Sensors (24) der Kamera (20);
(viii) Bestimmen (S220) des Winkelbereichs der Sonnenscheibe aus Standort und Uhrzeit (106);
(ix) Ausschließen (S218) des Winkelbereichs der Sonnenscheibe aus dem Winkelbereich des Sichtfelds der horizontalen und/oder geneigten Ebene;
(x) Integrieren (S214) der Bildbereiche über das Sichtfeld;
(xi) Bestimmen der diffusen Strahlung (220) in der horizontalen und/oder geneigten Ebene, insbesondere in der Ebene (44) der Strahlungssensoreinheit (10), durch Multiplikation (S222) mit einem Korrekturfaktor (212) der Kamerasensitivität.

2. Verfahren nach Anspruch 1, wobei zur Umrechnung der mit der Strahlungssensoreinheit (10) bestimmten Bestrahlungsstärke der Sonnenstrahlung in der Ebene (44) der Strahlungssensoreinheit (10) in die globale Bestrahlungsstärke (120) und/oder in wenigstens eine ihrer Komponenten in der horizontalen und/oder geneigten Ebene, wenigstens eine der Größen von
am Boden reflektierter Strahlung, und/oder
diffuser Strahlung (220) in der in der horizontalen und/oder geneigten Ebene, insbesondere in der Ebene (44) der Strahlungssensoreinheit (10), und/oder
des Sonnenstands bei der Strahlungsmessung und/oder
eines sensorspezifischen Korrekturfaktors, welcher insbesondere Linsenparameter der Kamera (20) umfasst,
herangezogen wird.

3. Verfahren nach Anspruch 1 oder 2, wobei zur Umrechnung von Messwerten der Kamera (20) wenigstens eine der Größen von
einem Verhältnis (210) einer breitbandigen Strahlung zu von der Kamera (20) registriertem Anteil der Strahlung, und/oder
einer Intensität (202) von RGB-Kanälen der Kamera (20), und/oder
einer internen und/oder externen Kalibration (208) der Kamera (20), und/oder
einer Neigung und Ausrichtung (102) des Sensors (24) der Kamera (20), und/oder
einer Neigung und Ausrichtung der geneigten Ebene, und/oder
des Sonnenstands bei der Strahlungsmessung und/oder
einer Kamerasensitivität, welche aus einer Beleuchtungsstärke (300) der Kamera (20) und/oder der spektralen Sensitivität (202) der RGB-Kanäle und/oder Aufnahmeeinstellungen (204) und/oder dem RGB-Kamerabild (206) und/oder der internen und/oder externen Kalibration (208) der Kamera (20) bestimmt wird,
herangezogen wird.

4. Verfahren nach einem der vorhergehenden Ansprüche, wobei Bildinformation der Kamera (20) zur Umrechnung der globalen Bestrahlungsstärke (120) in der Ebene (44) der Strahlungssensoreinheit (10) in die globale Bestrahlungsstärke (120) und/oder in wenigstens eine ihrer Komponenten in dieser oder einer anderen horizontalen und/oder geneigten Ebene einbezogen wird,
insbesondere wobei die Kombination der Bildinformation der Kamera (20) und/oder von Messwerten der Strahlungssensoreinheit (10) zur Reduktion der durch Bildartefakte verursachten Messfehler eingesetzt wird.

5. Verfahren nach einem der vorhergehenden Ansprüche, wobei die Bestimmung der direkten Strahlung (250) als einer Komponente der globalen Bestrahlungsstärke (120) in einer beliebigen Ebene erfolgt mit den Schritten:
(i) Bestimmen (S100) einer am Boden reflektierten Strahlung mittels Albedo (100), Neigung und Ausrichtung (102) der geneigten Ebene, sowie eines Messwerts (104) der globalen Bestrahlungsstärke in der Ebene (44) der Strahlungssensoreinheit (10);
(ii) Bestimmen der direkten Strahlung (108) in der Ebene (44) der Strahlungssensoreinheit (10) durch Subtraktion (S102) des Messwerts der diffusen Strahlung, ausgewertet für die Ebene (44) der Strahlungssensoreinheit (10) und der am Boden reflektierten Strahlung ausgewertet für die Ebene (44) der Strahlungssensoreinheit (10) von der globalen Bestrahlungsstärke (120) in der Ebene (44) der Strahlungssensoreinheit (10);
(iii) Bestimmen einer direkten Normalstrahlung (110) durch Umkehren der Projektion (S104) in die Ebene (44) der Strahlungssensoreinheit (10) mittels aus Standort und Uhrzeit (106) berechnetem Sonnenstand;
(iv) Bestimmen einer Linsenbrechungskorrektur durch Multiplizieren (S106) der direkten Normalstrahlung (110) mit einem Korrekturfaktor, welcher insbesondere Linsenparameter der Kamera (20) umfasst;
(v) Bestimmen der korrigierten direkten Strahlung (250) durch Addieren (S108) der direkten Strahlung (108) in der Ebene (44) der Strahlungssensoreinheit (10) und der Linsenbrechungskorrektur sowie Umkehren der Projektion (S110) in die Ebene (44) der Strahlungssensoreinheit (10) und Projektion (S112) in die beliebige Ebene.

6. Verfahren nach einem der vorhergehenden Ansprüche, wobei die Bestimmung der diffusen Strahlung (260) als einer Komponente der globalen Bestrahlungsstärke (120) in einer beliebigen Ebene erfolgt mit den Schritten:
(i) Bestimmen (S100) einer am Boden reflektierten Strahlung mittels Albedo (100), Neigung und Ausrichtung (102) der geneigten Ebene, sowie eines Messwerts (104) der globalen Bestrahlungsstärke in der Ebene (44) der Strahlungssensoreinheit (10);
(ii) Bestimmen der direkten Strahlung (108) in der Ebene (44) der Strahlungssensoreinheit (10) durch Subtraktion (S102) des Messwerts der diffusen Strahlung, ausgewertet für die Ebene (44) der Strahlungssensoreinheit (10) und der am Boden reflektierten Strahlung ausgewertet für die Ebene (44) der Strahlungssensoreinheit (10) von der globalen Bestrahlungsstärke in der Ebene (40) der Strahlungssensoreinheit (10);
(iii) Bestimmen einer direkten Normalstrahlung (110) durch Umkehren der Projektion (S104) in die Ebene (44) der Strahlungssensoreinheit (10) mittels aus Standort und Uhrzeit (106) berechnetem Sonnenstand;
(iv) Bestimmen einer Linsenbrechungskorrektur durch Multiplizieren (S106) der direkten Normalstrahlung (110) mit einem Korrekturfaktor, welcher insbesondere Linsenparameter der Kamera (20) umfasst;
(v) Bestimmen der korrigierten diffusen Strahlung (260) durch Subtrahieren der Linsenbrechungskorrektur (S116) von der diffusen Strahlung (220), ausgewertet für die beliebige Ebene.

7. Verfahren nach einem der vorhergehenden Ansprüche, wobei die Bestimmung der globalen Bestrahlungsstärke (120) der Sonnenstrahlung in der horizontalen und/oder geneigten Ebene erfolgt mit den Schritten:
(i) Bestimmen (S100) einer am Boden reflektierten Strahlung mittels Albedo (100), Neigung und Ausrichtung (102) der geneigten Ebene, sowie eines Messwerts (104) der globalen Bestrahlungsstärke in der Ebene (44) der Strahlungssensoreinheit (10);
(ii) Bestimmen der direkten Strahlung (108) in der Ebene (44) der Strahlungssensoreinheit (10) durch Subtraktion (S102) des Messwerts der diffusen Strahlung, ausgewertet für die Ebene (44) der Strahlungssensoreinheit (10) und der am Boden reflektierten Strahlung, ausgewertet für die Ebene (44) der Strahlungssensoreinheit (10) von der globalen Bestrahlungsstärke in der Ebene (44) der Strahlungssensoreinheit (10);
(iii) Bestimmen einer direkten Normalstrahlung (110) durch Umkehren der Projektion (S104) in die Ebene (44) der Strahlungssensoreinheit (10) mittels aus Standort und Uhrzeit (106) berechnetem Sonnenstand;
(iv) Bestimmen einer Linsenbrechungskorrektur durch Multiplizieren (S106) der direkten Normalstrahlung (110) mit einem Korrekturfaktor, welcher insbesondere Linsenparameter der Kamera (20) umfasst;
(v) Addieren (S108) der direkten Strahlung (108) in der Ebene (44) der Strahlungssensoreinheit (10) und der Linsenbrechungskorrektur sowie Umkehren der Projektion (S110) in die Ebene (44) der Strahlungssensoreinheit (10) und Projektion (S112) in die horizontale und/oder geneigte Ebene;
(vi) Subtrahieren der Linsenbrechungskorrektur (S116) von der diffusen Strahlung, ausgewertet für die horizontale Ebene (40) und/oder die geneigte Ebene;
(vii) Bestimmen der globalen Bestrahlungsstärke (120) in der horizontalen und/oder in der geneigten Ebene durch Summieren (S114) der am Boden reflektierten Strahlung, der direkten Strahlung (250) in der horizontalen und/oder geneigten Ebene, sowie der diffusen Strahlung (260), ausgewertet für die horizontale und/oder geneigte Ebene.

8. Verfahren nach einem der vorhergehenden Ansprüche, wobei eine Bestimmung (S300) des Korrekturfaktors (212) der Kamerasensitivität erfolgt mit den Schritten:
(i) Bestimmen (S302) von Gewichten entsprechend der Sensitivität jedes RGB-Kanals der Kamera (20) mittels der spektralen Sensitivität (202) der RGB-Kanäle und den Aufnahmeeinstellungen (204) der Kamera (20);
(ii) Bestimmen (S304) von Gewichten entsprechend der menschlichen Wahrnehmung;
(iii) Aufsummieren (S306) der gewichteten RGB-Kanäle aus dem RGB-Kamerabild (206);
(iv) Zuordnen (S310) von Winkelbereichen des Himmels zu Bildpixeln der Kamera (20) mittels der internen und/oder externen Kalibrationswerte (208) der Kamera (20);
(v) Integrieren (S308) der gewichteten RGB-Kanäle über die Hemisphäre des Himmels über der Ebene (46) der Kamera (20);
(vi) Bestimmen des Korrekturfaktors (212) der Kamerasensitivität durch Berechnung (S312) des Verhältnisses aus der Beleuchtungsstärke (300) der Kamera (20) und dem integrierten gewichteten RGB-Kamerabild.

9. Vorrichtung (500) zur Durchführung eines Verfahrens nach einem der vorhergehenden Ansprüche, umfassend wenigstens eine Strahlungssensoreinheit (10), eine Kamera (20), sowie eine Auswerteeinheit (32), welche zur Auswertung von Messdaten der Strahlungssensoreinheit (10) und/oder der Kamera (20) eingerichtet ist,
wobei die Strahlungssensoreinheit (10) in einer Ebene ( 44) angeordnet ist,
wobei die Strahlungssensoreinheit (10) die Bestrahlungsstärke solarer Strahlung in einem Sichtfeld (16) von 180° über der Ebene (44) bestimmt,
wobei die Kamera (20) in einer Ebene ( 46) angeordnet ist
wobei die Kamera (20) ein Sichtfeld (26) von 180° über der Ebene (46)erfasst,
wobei die Strahlungssensoreinheit (10) und die Kamera (20) in einem kombinierten Messaufbau am gleichen Standort angeordnet sind,
wobei die Bestrahlungsstärke solarer Strahlung mittels der Strahlungssensoreinheit (10) in der Ebene ( 44) der Strahlungssensoreinheit (10) gemessen wird,
wobei die Kamera eine Aufnahme des Himmels in dem Sichtfeld (26) erfasst und das Kamerabild ein Bild des Himmels ist, welches RGB-Kanäle aufweist,
wobei die Auswerteeinheit eingerichtet ist, eine Bestimmung (S200) der diffusen Strahlung (220) in der horizontalen und/oder geneigten Ebene, insbesondere in der Ebene (44) der Strahlungssensoreinheit (10), mit den Schritten durchzuführen:
(i) Bestimmen (S202) eines Breitband-Korrekturfaktors (210) aus dem Verhältnis breitbandiger Strahlung zu von der Kamera (20) registriertem Anteil mittels des Tageslichtspektrums (200) und der spektralen Sensitivität (202) von RGB-Kanälen der Kamera (20);
(ii) Bestimmen (S204) von Gewichten der RGB-Kanäle entsprechend der inversen Sensitivität mittels der Aufnahmeeinstellungen (204) der Kamera (20);
(iii) Summieren (S206) der gewichteten RGB-Kanäle des Kamerabilds (206);
(iv) Multiplizieren (S208) der summierten RGB-Kanäle mit dem Breitband-Korrekturfaktor (210);
(v) Zuordnen (S210) von Winkelbereichen des Himmels zu Bildpixeln der Kamera (20) mittels interner und/oder externer Kalibrationswerte (208) der Kamera (20);
(vi) Gewichten (S212) der Bildbereiche entsprechend der Projektion in die horizontale und/oder geneigte Ebene;
(vii) Bestimmen (S216) des Winkelbereichs des Sichtfeldes der horizontalen und/oder geneigten Ebene aus deren Neigung und Ausrichtung sowie aus der Neigung und Ausrichtung des Sensors (24) der Kamera (20);
(viii) Bestimmen (S220) des Winkelbereichs der Sonnenscheibe aus Standort und Uhrzeit (106);
(ix) Ausschließen (S218) des Winkelbereichs der Sonnenscheibe aus dem Winkelbereich des Sichtfelds der horizontalen und/oder geneigten Ebene;
(x) Integrieren (S214) der Bildbereiche über das Sichtfeld;
(xi) Bestimmen der diffusen Strahlung (220) in der horizontalen und/oder geneigten Ebene, insbesondere in der Ebene (44) der Strahlungssensoreinheit (10), durch Multiplikation (S222) mit einem Korrekturfaktor (212) der Kamerasensitivität.

10. Vorrichtung nach Anspruch 9, wobei wenigstens ein Sensor (14) der Strahlungssensoreinheit (10) und wenigstens ein Sensor (24) der Kamera (20) in der horizontalen Ebene (40) jeweils so angeordnet ist, dass das Sichtfeld (16, 26) der beiden Sensoren (14, 24) jeweils oberhalb der horizontalen Ebene (40) liegt und mit der horizontalen Ebene (40) abschließt.

11. Vorrichtung nach Anspruch 9 oder 10, wobei ein Abstand (30) zwischen der Strahlungssensoreinheit (10) und der Kamera (20) so eingestellt oder einstellbar ist, dass der Sensor (14) der Strahlungssensoreinheit (10) im Sichtfeld (26) der Kamera (20) mit einer Elevation (28) von höchstens 10°, bevorzugt von höchstens 5°, sichtbar ist.

12. Vorrichtung nach einem der Ansprüche 9 bis 11, wobei die Strahlungssensoreinheit (10) und die Kamera (20) gekoppelt sind, so dass eine Messdatenaufnahme von Strahlungssensoreinheit (10) und Kamera (20) zeitlich synchronisiert erfolgt.

13. Vorrichtung nach einem der Ansprüche 9 bis 12, wobei die Kamera (20) dazu ausgebildet ist, dass wenigstens folgende Eigenschaften vorliegen:
- eine Aufnahme eines Einzelbildes erfolgt in einem festen Zeitraster, insbesondere zu jeder halben und vollen Minute;
- der wenigstens eine Sensor (24) der Kamera (20) weist eine konstante Farbtemperatur auf;
- die Kamera (20) weist eine konstante Belichtungsdauer für jedes Einzelbild auf;
- für eine Belichtungssteuerung der Kamera (20) wird ein vorgegebener Mindestwert einer mittleren Bildhelligkeit eingestellt, wobei die Belichtungsdauer bei einer höheren Bildhelligkeit unverändert bleibt, insbesondere wobei der vorgegebene Mindestwert einer mittleren Bildhelligkeit bevorzugt höchstens 10%, besonders bevorzugt höchstens 8%, ganz besonders bevorzugt mindestens 5% beträgt.

14. Vorrichtung nach einem der Ansprüche 9 bis 13, wobei die Kamera (20) zur Aufnahme des Himmels in dem Sichtfeld (26) ausgebildet ist.

15. Vorrichtung nach einem der Ansprüche 9 bis 14, wobei die Strahlungssensoreinheit (10) wenigstens eines von Pyranometer, insbesondere Thermopile-Pyranometer, Photodiode, Photovoltaik-Referenz-Zelle aufweist.

16. Vorrichtung nach einem der Ansprüche 9 bis 15, wobei die Strahlungssensoreinheit (10) dazu ausgebildet ist, dass eine Messdatenaufnahme der Strahlungssensoreinheit (10) zeitlich hochaufgelöst, insbesondere mit einer zeitlichen Auflösung von kleiner 10 sec, bevorzugt kleiner 5 sec, besonders bevorzugt kleiner oder gleich 1 sec, erfolgt.

17. Vorrichtung nach einem der Ansprüche 9 bis 16, wobei die Strahlungssensoreinheit (10) zur Erfassung solarer Strahlung in einem Wellenlängenbereich von 0,3 µm bis 3 µm ausgebildet ist.

18. Vorrichtung nach einem der Ansprüche 9 bis 17, wobei die Kamera (20) zur Erfassung des gesamten Sichtfelds (26) in einer Aufnahme ausgebildet ist, insbesondere wobei die Kamera (20) als Überwachungskamera und/oder als Fischaugen-Kamera ausgebildet ist.

## Claims

1. Method for determining a global irradiance (120) of solar radiation and/or at least one of its components, in a horizontal plane (40) and/or in a plane tilted with respect to the horizontal plane (40), wherein the components comprise direct radiation (250), diffuse radiation (220, 260), radiation reflected off the ground, with a device (500), comprising at least one radiation sensor unit (10), a camera (20), and an evaluation unit (32), which is configured for evaluating measurement data from the radiation sensor unit (10) and/or from the camera (20),
wherein the radiation sensor unit (10) is arranged in a plane (44),
wherein the radiation sensor unit (10) determines the irradiance of solar radiation in a field of view (16) of 180° over the plane (44),
wherein the camera (20) is arranged in a plane (46),
wherein the camera (20) captures a field of view (26) of 180° over the plane (46),
wherein the radiation sensor unit (10) and the camera (20) are arranged in a combined measurement set-up at the same location, the camera image is an image of the sky, which has RGB channels;
wherein a global irradiance of the solar radiation is measured and converted into the global irradiance (120) and/or into one or more of its components in the horizontal plane (40) and/or in the plane tilted with respect to the horizontal plane (40),
wherein a determination (S200) of the diffuse radiation (220) in the horizontal and/or tilted plane, in particular in the plane (44) of the radiation sensor unit (10), is carried out comprising the steps of:
(i) determining (S202) a broadband correction factor (210) from the ratio of broadband radiation to the portion registered by the camera (20) by means of the daylight spectrum (200) and the spectral sensitivity (202) of RGB channels of the camera (20);
(ii) determining (S204) weights of the RGB channels according to the inverse sensitivity by means of the recording settings (204) of the camera (20);
(iii) summing (S206) the weighted RGB channels of the camera image (206);
(iv) multiplying (S208) the summed RGB channels by the broadband correction factor (210);
(v) assigning (S210) angular ranges of the sky to image pixels of the camera (20) by means of internal and/or external calibration values (208) of the camera (20);
(vi) weighting (S212) the image areas according to the projection into the horizontal and/or tilted plane;
(vii) determining (S216) the angular range of the field of view of the horizontal and/or tilted plane from the tilt and orientation thereof and from the tilt and orientation of the sensor (24) of the camera (20);
(viii)determining (S220) the angular range of the solar disc from location and time of day (106);
(ix) excluding (S218) the angular range of the solar disc from the angular range of the field of view of the horizontal and/or tilted plane;
(x) integrating (S214) the image areas over the field of view;
(xi) determining the diffuse radiation (220) in the horizontal and/or tilted plane, in particular in the plane (44) of the radiation sensor unit (10), by multiplication (S222) by a correction factor (212) of the camera sensitivity.

2. Method according to Claim 1, wherein for converting the irradiance of the solar radiation in the plane (44) of the radiation sensor unit (10), said irradiance having been determined by the radiation sensor unit (10), into the global irradiance (120) and/or into at least one of its components in the horizontal and/or tilted plane, at least one of the variables of
radiation reflected off the ground, and/or
diffuse radiation (220) in the in the horizontal and/or tilted plane, in particular in the plane (44) of the radiation sensor unit (10), and/or
the position of the sun in the radiation measurement, and/or
a sensor-specific correction factor, which comprises in particular lens parameters of the camera (20),
is used.

3. Method according to Claim 1 or 2, wherein for converting measured values of the camera (20), at least one of the variables of
a ratio (210) of a broadband radiation to the portion of the radiation registered by the camera (20), and/or
an intensity (202) of RGB channels of the camera (20), and/or
an internal and/or external calibration (208) of the camera (20), and/or
a tilt and an orientation (102) of the sensor (24) of the camera (20), and/or
a tilt and an orientation of the tilted plane, and/or the position of the sun in the radiation measurement, and/or
a camera sensitivity, which is determined from an illuminance (300) of the camera (20) and/or the spectral sensitivity (202) of the RGB channels and/or recording settings (204) and/or the RGB camera image (206) and/or the internal and/or external calibration (208) of the camera (20),
is used.

4. Method according to any of the preceding claims, wherein the method includes image information of the camera (20) for converting the global irradiance (120) in the plane (44) of the radiation sensor unit (10) into the global irradiance (120) and/or into at least one of its components in this or some other horizontal and/or tilted plane,
in particular wherein the combination of the image information of the camera (20) and/or measured values of the radiation sensor unit (10) is used to reduce the measurement errors caused by image artifacts.

5. Method according to any of the preceding claims, wherein the determination of the direct radiation (250) as a component of the global irradiance (120) in an arbitrary plane is carried out comprising the steps of:
(i) determining (S100) a radiation reflected off the ground by means of albedo (100), tilt and orientation (102) of the tilted plane, and a measured value (104) of the global irradiance in the plane (44) of the radiation sensor unit (10);
(ii) determining the direct radiation (108) in the plane (44) of the radiation sensor unit (10) by subtraction (S102) of the measured value of the diffuse radiation, evaluated for the plane (44) of the radiation sensor unit (10), and the radiation reflected off the ground, evaluated for the plane (44) of the radiation sensor unit (10), from the global irradiance (120) in the plane (44) of the radiation sensor unit (10);
(iii) determining a direct normal radiation (110) by reversing the projection (S104) into the plane (44) of the radiation sensor unit (10) by means of the position of the sun calculated from location and time of day (106);
(iv) determining a lens refraction correction by multiplying (S106) the direct normal radiation (110) by a correction factor, which comprises in particular lens parameters of the camera (20);
(v) determining the corrected direct radiation (250) by adding (S108) the direct radiation (108) in the plane (44) of the radiation sensor unit (10) and the lens refraction correction, and reversing the projection (S110) into the plane (44) of the radiation sensor unit (10) and projection (S112) into the arbitrary plane.

6. Method according to any of the preceding claims, wherein the determination of the diffuse radiation (260) as a component of the global irradiance (120) in an arbitrary plane is carried out comprising the steps of:
(i) determining (S100) a radiation reflected off the ground by means of albedo (100), tilt and orientation (102) of the tilted plane, and a measured value (104) of the global irradiance in the plane (44) of the radiation sensor unit (10);
(ii) determining the direct radiation (108) in the plane (44) of the radiation sensor unit (10) by subtraction (S102) of the measured value of the diffuse radiation, evaluated for the plane (44) of the radiation sensor unit (10), and the radiation reflected off the ground, evaluated for the plane (44) of the radiation sensor unit (10), from the global irradiance in the plane (40) of the radiation sensor unit (10);
(iii) determining a direct normal radiation (110) by reversing the projection (S104) into the plane (44) of the radiation sensor unit (10) by means of the position of the sun calculated from location and time of day (106);
(iv) determining a lens refraction correction by multiplying (S106) the direct normal radiation (110) by a correction factor, which comprises in particular lens parameters of the camera (20);
(v) determining the corrected diffuse radiation (260) by subtracting the lens refraction correction (S116) from the diffuse radiation (220), evaluated for the arbitrary plane.

7. Method according to any of the preceding claims, wherein the determination of the global irradiance (120) of the solar radiation in the horizontal and/or tilted plane is carried out comprising the steps of:
(i) determining (S100) a radiation reflected off the ground by means of albedo (100), tilt and orientation (102) of the tilted plane, and a measured value (104) of the global irradiance in the plane (44) of the radiation sensor unit (10);
(ii) determining the direct radiation (108) in the plane (44) of the radiation sensor unit (10) by subtraction (S102) of the measured value of the diffuse radiation, evaluated for the plane (44) of the radiation sensor unit (10), and the radiation reflected off the ground, evaluated for the plane (44) of the radiation sensor unit (10), from the global irradiance in the plane (44) of the radiation sensor unit (10);
(iii) determining a direct normal radiation (110) by reversing the projection (S104) into the plane (44) of the radiation sensor unit (10) by means of the position of the sun calculated from location and time of day (106);
(iv) determining a lens refraction correction by multiplying (S106) the direct normal radiation (110) by a correction factor, which comprises in particular lens parameters of the camera (20);
(v) adding (S108) the direct radiation (108) in the plane (44) of the radiation sensor unit (10) and the lens refraction correction, and reversing the projection (S110) into the plane (44) of the radiation sensor unit (10) and projection (S112) into the horizontal and/or tilted plane;
(vi) subtracting the lens refraction correction (S116) from the diffuse radiation, evaluated for the horizontal plane (40) and/or the tilted plane;
(vii) determining the global irradiance (120) in the horizontal and/or tilted plane by summing (S114) the radiation reflected off the ground, the direct radiation (250) in the horizontal and/or tilted plane, and the diffuse radiation (260), evaluated for the horizontal and/or tilted plane.

8. Method according to any of the preceding claims, wherein a determination (S300) of the correction factor (212) of the camera sensitivity is carried out comprising the steps of:
(i) determining (S302) weights according to the sensitivity of each RGB channel of the camera (20) by means of the spectral sensitivity (202) of the RGB channels and the recording settings (204) of the camera (20);
(ii) determining (S304) weights according to human perception;
(iii) summing (S306) the weighted RGB channels from the RGB camera image (206);
(iv) assigning (S310) angular ranges of the sky to image pixels of the camera (20) by means of the internal and/or external calibration values (208) of the camera (20);
(v) integrating (S308) the weighted RGB channels over the hemisphere of the sky above the plane (46) of the camera (20);
(vi) determining the correction factor (212) of the camera sensitivity by calculation (S312) of the ratio of the illuminance (300) of the camera (20) and the integrated weighted RGB camera image.

9. Device (500) for carrying out a method according to any of the preceding claims, comprising at least one radiation sensor unit (10), a camera (20), and an evaluation unit (32), which is configured for evaluating measurement data from the radiation sensor unit (10) and/or from the camera (20),
wherein the radiation sensor unit (10) is arranged in a plane (44),
wherein the radiation sensor unit (10) determines the irradiance of solar radiation in a field of view (16) of 180° over the plane (44),
wherein the camera (20) is arranged in a plane (46),
wherein the camera (20) captures a field of view (26) of 180° over the plane (46),
wherein the radiation sensor unit (10) and the camera (20) are arranged in a combined measurement set-up at the same location,
wherein the irradiance of solar radiation is measured by means of the radiation sensor unit (10) in the plane (44) of the radiation sensor unit (10),
wherein the camera captures a recording of the sky in the field of view (26) and the camera image is an image of the sky, which has RGB channels,
wherein the evaluation unit is configured to carry out a determination (S200) of the diffuse radiation (220) in the horizontal and/or tilted plane, in particular in the plane (44) of the radiation sensor unit (10), comprising the steps of:
(i) determining (S202) a broadband correction factor (210) from the ratio of broadband radiation to the portion registered by the camera (20) by means of the daylight spectrum (200) and the spectral sensitivity (202) of RGB channels of the camera (20);
(ii) determining (S204) weights of the RGB channels according to the inverse sensitivity by means of the recording settings (204) of the camera (20);
(iii) summing (S206) the weighted RGB channels of the camera image (206);
(iv) multiplying (S208) the summed RGB channels by the broadband correction factor (210);
(v) assigning (S210) angular ranges of the sky to image pixels of the camera (20) by means of internal and/or external calibration values (208) of the camera (20);
(vi) weighting (S212) the image areas according to the projection into the horizontal and/or tilted plane;
(vii) determining (S216) the angular range of the field of view of the horizontal and/or tilted plane from the tilt and orientation thereof and from the tilt and orientation of the sensor (24) of the camera (20);
(viii)determining (S220) the angular range of the solar disc from location and time of day (106);
(ix) excluding (S218) the angular range of the solar disc from the angular range of the field of view of the horizontal and/or tilted plane;
(x) integrating (S214) the image areas over the field of view;
(xi) determining the diffuse radiation (220) in the horizontal and/or tilted plane, in particular in the plane (44) of the radiation sensor unit (10), by multiplication (S222) by a correction factor (212) of the camera sensitivity.

10. Device according to Claim 9, wherein at least one sensor (14) of the radiation sensor unit (10) and at least one sensor (24) of the camera (20) are each arranged in the horizontal plane (40) in such a way that the field of view (16, 26) of the two sensors (14, 24) in each case is above the horizontal plane (40) and terminates with the horizontal plane (40).

11. Device according to Claim 9 or 10, wherein a distance (30) between the radiation sensor unit (10) and the camera (20) is set or settable in such a way that the sensor (14) of the radiation sensor unit (10) is visible in the field of view (26) of the camera (20) with an elevation (28) of at most 10°, preferably of at most 5°.

12. Device according to any of Claims 9 to 11, wherein the radiation sensor unit (10) and the camera (20) are coupled, such that measurement data are recorded by radiation sensor unit (10) and camera (20) in a manner synchronized over time.

13. Device according to any of Claims 9 to 12, wherein the camera (20) is designed to the effect that at least the following properties are present:
- an individual image is recorded in a fixed time frame, in particular every half minute and full minute;
- the at least one sensor (24) of the camera (20) has a constant colour temperature;
- the camera (20) has a constant exposure duration for each individual image;
- for an exposure control of the camera (20), a predefined minimum value of an average image brightness is set, wherein the exposure duration remains unchanged at a higher image brightness, in particular wherein the predefined minimum value of an average image brightness is preferably at most 10%, particularly preferably at most 8%, very particularly preferably at least 5%.

14. Device according to any of Claims 9 to 13, wherein the camera (20) is designed to record the sky in the field of view (26).

15. Device according to any of Claims 9 to 14, wherein the radiation sensor unit (10) has at least one out of pyranometer, in particular thermopile pyranometer, photodiode, photovoltaic reference cell.

16. Device according to any of Claims 9 to 15, wherein the radiation sensor unit (10) is designed to the effect that measurement data are recorded by the radiation sensor unit (10) with high temporal resolution, in particular with a temporal resolution of less than 10 sec, preferably less than 5 sec, particularly preferably less than or equal to 1 sec.

17. Device according to any of Claims 9 to 16, wherein the radiation sensor unit (10) is designed to capture solar radiation in a wavelength range of 0.3 µm to 3 µm.

18. Device according to any of Claims 9 to 17, wherein the camera (20) is designed to capture the entire field of view (26) in one recording, in particular wherein the camera (20) is designed as a surveillance camera and/or as a fisheye camera.

## Revendications

1. Procédé de détermination d'un éclairement énergétique global (120) du rayonnement solaire et/ou d'au moins l'une de ses composantes, dans un plan horizontal (40) et/ou dans un plan incliné par rapport au plan horizontal (40), les composantes comprenant un rayonnement direct (250), un rayonnement diffus (220, 260), un rayonnement réfléchi au sol, avec un dispositif (500), comprenant au moins une unité de détection de rayonnement (10), une caméra (20) ainsi qu'une unité d'évaluation (32), laquelle est conçue pour évaluer des données de mesure de l'unité de détection de rayonnement (10) et/ou de la caméra (20),
l'unité de détection de rayonnement (10) étant disposée dans un plan (44),
l'unité de détection de rayonnement (10) déterminant l'éclairement énergétique du rayonnement solaire dans un champ de vision (16) de 180° au-dessus du plan (44),
la caméra (20) étant disposée dans un plan (46),
la caméra (20) capturant un champ de vision (26) de 180° au-dessus du plan (46),
l'unité de détection de rayonnement (10) et la caméra (20) étant disposées au même endroit dans une structure de mesure combinée, l'image de la caméra étant une image du ciel qui possède des canaux RVB ;
un éclairement énergétique global du rayonnement solaire étant mesuré et convertie en l'éclairement énergétique global (120) et/ou en une ou plusieurs de ses composantes dans le plan horizontal (40) et/ou dans le plan incliné par rapport au plan horizontal (40),
une détermination (S200) du rayonnement diffus (220) dans le plan horizontal et/ou incliné, en particulier dans le plan (44) de l'unité de détection de rayonnement (10), étant effectuée avec les étapes suivantes :
(i) détermination (S202) d'un facteur de correction à large bande (210) à partir du rapport du rayonnement à large bande à la proportion enregistrée par la caméra (20) au moyen du spectre de lumière du jour (200) et de la sensibilité spectrale (202) des canaux RVB de la caméra (20) ;
(ii) détermination (S204) des poids des canaux RVB conformément à la sensibilité inverse au moyen des réglages d'enregistrement (204) de la caméra (20) ;
(iii) sommation (S206) des canaux RVB pondérés de l'image de la caméra (206) ;
(iv) multiplication (S208) des canaux RVB sommés par le facteur de correction à large bande (210) ;
(v) association (S210) de plages angulaires du ciel à des pixels d'image de la caméra (20) au moyen de valeurs d'étalonnage internes et/ou externes (208) de la caméra (20) ;
(vi) pondération (S212) des zones de l'image conformément à la projection dans le plan horizontal et/ou incliné ;
(vii) détermination (S216) de la plage angulaire du champ de vision du plan horizontal et/ou incliné à partir de son inclinaison et de son alignement ainsi qu'à partir de l'inclinaison et de l'alignement du capteur (24) de la caméra (20) ;
(viii)détermination (S220) de la plage angulaire du disque solaire à partir de l'emplacement et de l'heure (106) ;
(ix) exclusion (S218) de la plage angulaire du disque solaire de la plage angulaire du champ de vision du plan horizontal et/ou incliné ;
(x) intégration (S214) des zones de l'image sur le champ de vision ;
(xi) détermination du rayonnement diffus (220) dans le plan horizontal et/ou incliné, en particulier dans le plan (44) de l'unité de détection de rayonnement (10), par multiplication (S222) par un facteur de correction (212) de la sensibilité de la caméra.

2. Procédé selon la revendication 1, au moins l'une des grandeurs suivantes étant utilisé pour la conversion de l'éclairement énergétique du rayonnement solaire déterminé par l'unité de détection de rayonnement (120) dans le plan (44) de l'unité de détection de rayonnement (10) en l'éclairement énergétique global (10) et/ou en au moins l'une de ses composantes dans le plan horizontal et/ou incliné :
rayonnement réfléchi au sol, et/ou
rayonnement diffus (220) dans le plan horizontal et/ou incliné, en particulier dans le plan (44) de l'unité de détection de rayonnement (10), et/ou
la position du soleil lors de la mesure du rayonnement et/ou
un facteur de correction spécifique au capteur, lequel comprend notamment les paramètres d'objectif de la caméra (20).

3. Procédé selon la revendication 1 ou 2, au moins l'une des grandeurs suivantes étant utilisée pour la conversion des valeurs de mesure de la caméra (20)
un rapport (210) d'un rayonnement à large bande à une proportion du rayonnement enregistré par la caméra (20), et/ou
une intensité (202) des canaux RVB de la caméra (20), et/ou
un étalonnage interne et/ou externe (208) de la caméra (20), et/ou
une inclinaison et une orientation (102) du capteur (24) de la caméra (20), et/ou
une inclinaison et une orientation du plan incliné, et/ou
la position du soleil lors de la mesure du rayonnement et/ou
une sensibilité de caméra, laquelle est déterminée à partir d'un éclairement énergétique (300) de la caméra (20) et/ou de la sensibilité spectrale (202) des canaux RVB et/ou des réglages d'enregistrement (204) et/ou de l'image de caméra RVB (206) et/ou de l'étalonnage interne et/ou externe (208) de la caméra (20).

4. Procédé selon l'une des revendications précédentes, des informations d'image de la caméra (20) étant incluses pour la conversion de l'éclairement énergétique global (120) dans le plan (44) de l'unité de détection de rayonnement (10) en l'éclairement énergétique global (120) et/ou en au moins l'une de ses composantes dans ce plan ou un autre, horizontal et/ou incliné,
la combinaison des informations d'image de la caméra (20) et/ou des valeurs de mesure de l'unité de détection de rayonnement (10) étant notamment utilisée pour réduire les erreurs de mesure provoquées par des artefacts d'image.

5. Procédé selon l'une des revendications précédentes, la détermination du rayonnement direct (250) en tant qu'une composante de l'éclairement énergétique global (120) étant effectuée dans un plan quelconque avec les étapes suivantes :
(i) détermination (S100) d'un rayonnement réfléchi au sol au moyen de l'albédo (100), de l'inclinaison et de l'orientation (102) du plan incliné, ainsi que d'une valeur de mesure (104) de l'éclairement énergétique global dans le plan (44) de l'unité de détection de rayonnement (10);
(ii) détermination du rayonnement direct (108) dans le plan (44) de l'unité de détection de rayonnement (10) par soustraction (S102) de la valeur mesurée du rayonnement diffus, évaluée pour le plan (44) de l'unité de détection de rayonnement (10) et du rayonnement réfléchi au sol évalué pour le plan (44) de l'unité de détection de rayonnement (10) de l'éclairage énergétique global (120) dans le plan (44) de l'unité de détection de rayonnement (10);
(iii) détermination d'un rayonnement normal direct (110) par inversion de la projection (S104) dans le plan (44) de l'unité de détection de rayonnement (10) au moyen d'une position du soleil calculée à partir de l'emplacement et de l'heure (106);
(iv) détermination d'une correction de réfraction d'objectif par multiplication (S106) du rayonnement normal direct (110) par un facteur de correction, lequel comprend notamment les paramètres d'objectif de la caméra (20);
(v) détermination du rayonnement direct corrigé (250) par addition (S108) du rayonnement direct (108) dans le plan (44) de l'unité de détection de rayonnement (10) et de la correction de réfraction d'objectif ainsi qu'inversion de la projection (S110) dans le plan (44) de l'unité de détection de rayonnement (10) et projection (S112) dans le plan quelconque.

6. Procédé selon l'une des revendications précédentes, la détermination du rayonnement diffus (260) en tant qu'une composante de l'éclairement énergétique global (120) étant effectuée dans un plan quelconque avec les étapes suivantes:
(i) détermination (S100) d'un rayonnement réfléchi au sol au moyen de l'albédo (100), de l'inclinaison et de l'orientation (102) du plan incliné, ainsi que d'une valeur de mesure (104) de l'éclairement énergétique global dans le plan (44) de l'unité de détection de rayonnement (10);
(ii) détermination du rayonnement direct (108) dans le plan (44) de l'unité de détection de rayonnement (10) par soustraction (S102) de la valeur mesurée du rayonnement diffus, évaluée pour le plan (44) de l'unité de détection de rayonnement (10) et du rayonnement réfléchi au sol évalué pour le plan (44) de l'unité de détection de rayonnement (10) de l'éclairage énergétique global dans le plan (40) de l'unité de détection de rayonnement (10);
(iii) détermination d'un rayonnement normal direct (110) par inversion de la projection (S104) dans le plan (44) de l'unité de détection de rayonnement (10) au moyen d'une position du soleil calculée à partir de l'emplacement et de l'heure (106);
(iv) détermination d'une correction de réfraction d'objectif par multiplication (S106) du rayonnement normal direct (110) par un facteur de correction, lequel comprend notamment les paramètres d'objectif de la caméra (20);
(v) détermination du rayonnement diffus corrigé (260) par soustraction de la correction de réfraction d'objectif (S116) du rayonnement diffus (220), évalué pour le plan quelconque.

7. Procédé selon l'une des revendications précédentes, la détermination de l'éclairement énergétique global (120) du rayonnement étant effectuée dans le plan horizontal et/ou incliné avec les étapes suivantes:
(i) détermination (S100) d'un rayonnement réfléchi au sol au moyen de l'albédo (100), de l'inclinaison et de l'orientation (102) du plan incliné, ainsi que d'une valeur de mesure (104) de l'éclairement énergétique global dans le plan (44) de l'unité de détection de rayonnement (10);
(ii) détermination du rayonnement direct (108) dans le plan (44) de l'unité de détection de rayonnement (10) par soustraction (S102) de la valeur mesurée du rayonnement diffus, évaluée pour le plan (44) de l'unité de détection de rayonnement (10) et du rayonnement réfléchi au sol évalué pour le plan (44) de l'unité de détection de rayonnement (10) de l'éclairage énergétique global dans le plan (44) de l'unité de détection de rayonnement (10);
(iii) détermination d'un rayonnement normal direct (110) par inversion de la projection (S104) dans le plan (44) de l'unité de détection de rayonnement (10) au moyen d'une position du soleil calculée à partir de l'emplacement et de l'heure (106);
(iv) détermination d'une correction de réfraction d'objectif par multiplication (S106) du rayonnement normal direct (110) par un facteur de correction, lequel comprend notamment les paramètres d'objectif de la caméra (20);
(v) addition (S108) du rayonnement direct (108) dans le plan (44) de l'unité de détection de rayonnement (10) et de la correction de réfraction d'objectif ainsi qu'inversion de la projection (S110) dans le plan (44) de l'unité de détection de rayonnement (10) et projection (S112) dans le plan horizontal et/ou incliné;
(vi) soustraction de la correction de réfraction d'objectif (S116) du rayonnement diffus, évalué pour le plan horizontal (40) et/ou le plan incliné;
(vii) détermination de l'éclairement énergétique global (120) dans le plan horizontal et/ou dans le plan incliné par sommation (S114) du rayonnement réfléchi au sol, du rayonnement direct (250) dans le plan horizontal et/ou incliné ainsi que du rayonnement diffus (260), évalué pour le plan horizontal et/ou incliné.

8. Procédé selon l'une des revendications précédentes, une détermination (S300) du facteur de correction (212) de la sensibilité de la caméra étant effectuée avec les étapes suivantes:
(i) détermination (S302) des poids correspondant à la sensibilité de chaque canal RVB de la caméra (20) au moyen de la sensibilité spectrale (202) des canaux RVB et des réglages d'enregistrement (204) de la caméra (20);
(ii) détermination (S304) des poids correspondant à la perception humaine;
(iii) sommation (S306) des canaux RVB pondérés issus de l'image de caméra RVB (206) ;
(iv) association (S310) de plages angulaires du ciel à des pixels d'image de la caméra (20) au moyen de valeurs d'étalonnage internes et/ou externes (208) de la caméra (20);
(v) intégration (S308) des canaux RVB pondérés sur l'hémisphère du ciel au-dessus du plan (46) de la caméra (20);
(vi) détermination du facteur de correction (212) de la sensibilité de la caméra par calcul (S312) du rapport entre l'éclairement énergétique (300) de la caméra (20) et l'image de caméra RVB pondérée intégrée.

9. Dispositif (500) pour la mise en œuvre d'un procédé selon l'une des revendications précédentes, comprenant au moins une unité de détection de rayonnement (10), une caméra (20) ainsi qu'une unité d'évaluation (32), laquelle est conçue pour évaluer des données de mesure de l'unité de détection de rayonnement (10) et/ou de la caméra (20),
l'unité de détection de rayonnement (10) étant disposée dans un plan (44),
l'unité de détection de rayonnement (10) déterminant l'éclairement énergétique du rayonnement solaire dans un champ de vision (16) de 180° au-dessus du plan (44),
la caméra (20) étant disposée dans un plan (46),
la caméra (20) capturant un champ de vision (26) de 180° au-dessus du plan (46),
l'unité de détection de rayonnement (10) et la caméra (20) étant disposées au même endroit dans une structure de mesure combinée,
l'éclairement énergétique du rayonnement solaire étant mesuré au moyen de l'unité de détection de rayonnement (10) dans le plan (44) de l'unité de détection de rayonnement (10),
la caméra capturant un enregistrement du ciel dans le champ de vision (26) et l'image de la caméra étant une image du ciel qui possède des canaux RVB,
l'unité d'évaluation étant conçue pour effectuer une détermination (S200) du rayonnement diffus (220) dans le plan horizontal et/ou incliné, en particulier dans le plan (44) de l'unité de détection de rayonnement (10), avec les étapes suivantes:
(i) détermination (S202) d'un facteur de correction à large bande (210) à partir du rapport du rayonnement à large bande à la proportion enregistrée par la caméra (20) au moyen du spectre de lumière du jour (200) et de la sensibilité spectrale (202) des canaux RVB de la caméra (20);
(ii) détermination (S204) des poids des canaux RVB conformément à la sensibilité inverse au moyen des réglages d'enregistrement (204) de la caméra (20) ;
(iii) sommation (S206) des canaux RVB pondérés de l'image de la caméra (206);
(iv) multiplication (S208) des canaux RVB sommés par le facteur de correction à large bande (210) ;
(v) association (S210) de plages angulaires du ciel à des pixels d'image de la caméra (20) au moyen de valeurs d'étalonnage internes et/ou externes (208) de la caméra (20);
(vi) pondération (S212) des zones de l'image conformément à la projection dans le plan horizontal et/ou incliné;
(vii) détermination (S216) de la plage angulaire du champ de vision du plan horizontal et/ou incliné à partir de son inclinaison et de son alignement ainsi qu'à partir de l'inclinaison et de l'alignement du capteur (24) de la caméra (20);
(viii)détermination (S220) de la plage angulaire du disque solaire à partir de l'emplacement et de l'heure (106) ;
(ix) exclusion (S218) de la plage angulaire du disque solaire de la plage angulaire du champ de vision du plan horizontal et/ou incliné;
(x) intégration (S214) des zones de l'image sur le champ de vision;
(xi) détermination du rayonnement diffus (220) dans le plan horizontal et/ou incliné, en particulier dans le plan (44) de l'unité de détection de rayonnement (10), par multiplication (S222) par un facteur de correction (212) de la sensibilité de la caméra.

10. Dispositif selon la revendication 9, au moins un capteur (14) de l'unité de détection de rayonnement (10) et au moins un capteur (24) de la caméra (20) étant respectivement disposés dans le plan horizontal (40) de telle sorte que le champ de vision (16, 26) des deux capteurs (14, 24) se situe respectivement au-dessus du plan horizontal (40) et se termine par le plan horizontal (40).

11. Dispositif selon la revendication 9 ou 10, un écart (30) entre l'unité de détection de rayonnement (10) et la caméra (20) étant réglé ou réglable de telle sorte que le capteur (14) de l'unité de détection de rayonnement (10) est visible dans le champ de vision (26) de la caméra (20) avec une élévation (28) d'au plus 10°, de préférence d'au plus 5°.

12. Dispositif selon l'une des revendications 9 à 11, l'unité de détection de rayonnement (10) et la caméra (20) étant couplées de telle sorte qu'un enregistrement des données de mesure de l'unité de détection de rayonnement (10) et de la caméra (20) s'effectue de manière synchronisée dans le temps.

13. Dispositif selon l'une des revendications 9 à 12, la caméra (20) étant configurée de manière à ce qu'au moins les propriétés suivantes soient présentes:
- un enregistrement d'une image individuelle est effectué dans une grille temporelle fixe, en particulier toutes les demi-minutes et toutes les minutes;
- l'au moins un capteur (24) de la caméra (20) présente une température de couleur constante;
- la caméra (20) présente une durée d'exposition constante pour chaque image individuelle;
- une valeur minimale prédéfinie d'une luminosité d'image moyenne est réglée pour une commande d'exposition de la caméra (20), la durée d'exposition restant inchangée en présence d'une luminosité d'image plus élevée, la valeur minimale prédéfinie d'une luminosité d'image moyenne étant notamment de préférence d'au plus 10 %, de manière particulièrement préférée d'au plus 8 %, de manière tout particulièrement préférée d'au moins 5 %.

14. Dispositif selon l'une des revendications 9 à 13, la caméra (20) étant configurée pour enregistrer le ciel dans le champ de vision (26).

15. Dispositif selon l'une des revendications 9 à 14, l'unité de détection de rayonnement (10) possédant au moins un pyranomètre, en particulier un pyranomètre à thermopile, et/ou une photodiode et/ou une cellule de référence photovoltaïque.

16. Dispositif selon l'une des revendications 9 à 15, l'unité de détection de rayonnement (10) étant configurée pour qu'un enregistrement des données de mesure de l'unité de détection de rayonnement (10) s'effectue avec une résolution temporelle élevée, en particulier avec une résolution temporelle inférieure à 10 secondes, de préférence inférieure à 5 secondes, de manière particulièrement préférée inférieure ou égale à 1 seconde.

17. Dispositif selon l'une des revendications 9 à 16, l'unité de détection de rayonnement (10) étant configurée pour détecter le rayonnement solaire dans une plage de longueurs d'onde de 0,3 µm à 3 µm.

18. Dispositif selon l'une des revendications 9 à 17, la caméra (20) étant configurée pour capturer la totalité du champ de vision (26) dans un enregistrement, la caméra (20) étant notamment réalisée sous la forme d'une caméra de surveillance et/ou d'une caméra à très grand angle.
